(19) **Europäisches Patentamt / European Patent Office / Office européen des brevets**

(11) **EP 4 208 956 B1**

(12) **FASCICULE DE BREVET EUROPEEN**

(45) Date de publication et mention de la délivrance du brevet:
**09.07.2025 Bulletin 2025/28**

(21) Numéro de dépôt: **21766684.1**

(22) Date de dépôt: **31.08.2021**

(51) Classification Internationale des Brevets (IPC):
*H04B 7/06* (2006.01)   *H01Q 21/00* (2006.01)
*H01Q 3/24* (2006.01)   *H01Q 9/28* (2006.01)
*H01Q 21/08* (2006.01)   *H01Q 21/29* (2006.01)
*H01Q 5/385* (2015.01)   *H01Q 1/28* (2006.01)
*H01Q 23/00* (2006.01)   *H01Q 25/00* (2006.01)
*H01Q 21/28* (2006.01)

(52) Classification Coopérative des Brevets (CPC):
**H01Q 3/24; H01Q 5/385; H01Q 9/285; H01Q 21/08; H01Q 21/28; H01Q 21/29; H01Q 23/00; H01Q 25/001; H04B 7/0617**

(86) Numéro de dépôt international:
**PCT/EP2021/073931**

(87) Numéro de publication internationale:
**WO 2022/049043 (10.03.2022 Gazette 2022/10)**

(54) **SYSTÈME D'ÉMISSION/RÉCEPTION RADIOFRÉQUENCE, INSTALLATION ET PROCÉDÉ ASSOCIÉS**

HOCHFREQUENZ-SENDE-/EMPFANGSSYSTEM UND ZUGEHÖRIGE EINRICHTUNG UND VERFAHREN

RADIOFREQUENCY TRANSMISSION/RECEPTION SYSTEM, AND ASSOCIATED FACILITY AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2020 FR 2008873**

(43) Date de publication de la demande:
**12.07.2023 Bulletin 2023/28**

(73) Titulaires:
• **TDF**
  **92120 Montrouge (FR)**
• **Université de Rennes**
  **35042 Rennes (FR)**

(72) Inventeurs:
• **FOFANA, Seydouba**
  **35000 RENNES (FR)**
• **PALUD, Sébastien**
  **35830 BETTON (FR)**
• **FUCHS, Benjamin**
  **35700 RENNES (FR)**
• **COLOMBEL, Franck**
  **35160 MONTFORT-SUR-MEU (FR)**
• **AVRILLON, Stéphane**
  **35700 RENNES (FR)**

(74) Mandataire: **Gevers & Orès**
  **Immeuble le Palatin 2**
  **3 Cours du Triangle**
  **CS 80165**
  **92939 Paris La Défense Cedex (FR)**

(56) Documents cités:
**WO-A1-2014/091274   US-A1- 2005 088 358**

**Description**

La présente invention concerne un système d'émission/réception radiofréquence, ainsi qu'une installation d'émission/réception radiofréquence et un procédé associés.

Dans l'article scientifique d'A. M. Montaser et al. intitulé « Circular, Hexagonal and Octagonal Array Geometries for Smart Antenna Systems Using Hybrid CFO-HC Algorithm » publié dans Journal of Engineering Sciences, vol. 40, n° 16, p. 1715-1732, novembre 2012, il est décrit un système d'émission/réception radiofréquence comportant un réseau d'antennes actives octogonal et un dispositif de commande du réseau d'antennes actives conçu pour commander les antennes actives de manière à émettre un diagramme multidirectionnel de rayonnement à 360° selon un gabarit prédéfini.

Ce système est particulièrement contraignant sur le plan de la consommation énergétique étant donné que le réseau d'antennes émet simultanément suivant plusieurs directions même en l'absence de terminal mobile à suivre dans chacune de ces directions.

Une autre solution pour émettre suivant plusieurs directions consiste à dépointer un faisceau unidirectionnel. Dans ce cadre, l'article scientifique de S. Han., C.-L. I, Z. Xu et a. C. Rowell, intitulé « Large-Scale Antenna Systems with Hybrid Analog and Digital Beamforming for Millimeter Wave 5G » et publié dans IEEE Communications Magazine, janvier 2015, décrit un système d'émission/réception radiofréquence du type comportant :

- un réseau d'antennes actives comportant un groupe principal d'antennes actives orientées selon une direction principale; et
- un dispositif de commande du réseau d'antennes actives conçu pour :

  ▪ recevoir une valeur de dépointage parmi plusieurs valeurs de dépointage possibles ; et
  ▪ commander les antennes actives de manière à émettre un faisceau dépointé de la valeur de dépointage reçue, par rapport à la direction principale.

En particulier, dans l'état de la technique, le réseau d'antennes est linéaire.

Pour diminuer la consommation énergétique d'un tel système, le dispositif de commande est conçu pour mettre en œuvre un procédé visant à éteindre un maximum d'antennes, tout en respectant un gabarit de rayonnement avec la valeur de dépointage reçue.

Par ailleurs, des éléments parasites configurables dans un réseau d'antennes sont connus du document US2005088358A1.

Or, les inventeurs ont constaté qu'il était difficile d'éteindre des antennes supplémentaires au fur et à mesure que l'angle de dépointage du faisceau augmente (e.g. jusqu'à une valeur maximale de $\pm$ 45°). Il existe donc un besoin de faciliter le dépointage d'un faisceau à des valeurs de dépointage élevées (i.e. de l'ordre de $\pm$ 45°) tout en rendant le dépointage moins contraignant énergétiquement pour réduire la consommation énergétique du réseau d'antennes actives, quelque que soit la topologie du réseau d'antennes.

Il peut ainsi être souhaité de prévoir un système d'émission/réception radiofréquence qui permette de s'affranchir d'au moins une partie des problèmes et contraintes précités.

Il est donc proposé un système d'émission/réception radiofréquence selon la revendication 1, comportant.

- un réseau d'antennes actives;
- un dispositif de commande du réseau d'antennes actives conçu pour :

  ▪ recevoir une valeur de dépointage parmi plusieurs valeurs de dépointage possibles ;
  ▪ commander les antennes actives de manière à émettre au moins un faisceau dépointé d'un dépointage reçu par rapport à une direction par défaut ;

- des éléments parasites associés respectivement à au moins certaines des antennes actives dudit réseau ; et

des moyens de pilotage selon la revendication 1.

Ainsi, le pilotage de tout ou partie des éléments parasites permet de changer la directivité des antennes associées, ce qui a pour effet de réduire la consommation énergétique du réseau d'antennes actives en dépointage, tout particulièrement pour des valeurs de dépointages élevées (i.e. $\pm$ 45°). Quelle que soit la topologie du réseau considérée (e.g. à une dimension : linéaire, linéaire par sections, circulaire ; à deux dimensions : planaire, planaire par sections, hémisphérique, etc), ces éléments parasites permettent avantageusement de dépointer à moindre coût énergétique le faisceau à $\pm$ 45°, voire au-delà de cette valeur.

De façon optionnelle,

- les antennes du réseau d'antennes actives sont unidirectionnelles ;
- les moyens de pilotage sont conçus pour reconfigurer toutes les antennes actives dudit réseau selon l'état plus directif, lorsque la valeur de dépointage reçue est comprise au moins entre -15° et + 15°;
- chaque élément parasite comprend au moins deux sous-éléments, le système comportant en outre, pour chaque élément parasite, une diode PIN conçue pour connecter lesdits au moins deux sous-éléments entre eux et dans lequel les moyens de pilotage sont conçus pour sélectivement piloter chacune des diodes PIN;
- le réseau d'antennes actives comprend :

  • un groupe principal d'antennes actives orientées selon une direction principale ; et
  • au moins un groupe auxiliaire d'une ou plusieurs antennes actives, dites auxiliaires, orientées selon une direction auxiliaire, différente de la direction principale;

De manière optionnelle,

- les moyens de pilotage sont adaptés pour configurer les antennes du groupe principal selon l'état moins directif et les antennes auxiliaires selon l'état plus directif, lorsque la valeur de dépointage reçue est égale à +45° ±10° ou -45°±10° ;
- la direction principale et la direction auxiliaire forment un angle aigu, par exemple compris entre -50° et -30° ou entre +30° et +50°, de préférence égal à ±45°± 10°;
- le groupe principal comprend un nombre principal d'antennes et ledit au moins un groupe auxiliaire comprend un nombre auxiliaire d'antennes compris entre 1/7 et 1/3 du nombre principal;
- le système comporte :

  • un premier groupe auxiliaire d'antennes actives auxiliaires orientées selon une première direction auxiliaire; la direction principale formant avec la première direction auxiliaire un premier angle aigu, par exemple compris entre +30° et +50°, de préférence égal à +45°± 10°; et
  • un deuxième groupe auxiliaire d'antennes actives auxiliaires orientées selon une deuxième direction auxiliaire, différente de la direction principale et de la première direction auxiliaire ; la direction principale formant avec la deuxième direction auxiliaire un deuxième angle aigu, par exemple compris entre -30° et -50°, de préférence égal à -45°± 10° ;

- les premier et deuxième angles sont de signe opposé et ont des valeurs absolues égales, de préférence à 45°± 10°;
- les premier et deuxième groupes auxiliaires d'antennes actives ont un même nombre d'antennes actives ;
- chaque antenne active comprend un élément rayonnant et le système comporte un support des éléments rayonnants, et le support comporte une section respective pour chaque groupe d'antennes actives, et chaque section du support est soit linéaire de sorte que les éléments rayonnants sont distribués selon une droite le long de cette section de support, soit plane de sorte que les éléments rayonnants sont distribués selon une matrice en deux dimensions sur cette section de support plane ;
- le faisceau émis est unidirectionnel.

Il est également proposé une installation d'émission/réception radiofréquence comportant quatre systèmes selon l'invention, agencés en octogone. Chaque système comportant :

• un premier groupe auxiliaire d'antennes actives auxiliaires orientées selon une première direction auxiliaire ; la direction principale formant avec la première direction auxiliaire un premier angle aigu, par exemple compris entre +30° et +50°, de préférence égal à +45°± 10° ; et

• un deuxième groupe auxiliaire d'antennes actives auxiliaires orientées selon une deuxième direction auxiliaire, différente de la direction principale et de la première direction auxiliaire ; la direction principale formant avec la deuxième direction auxiliaire un deuxième angle aigu, par exemple compris entre -30° et -50°, de préférence égal à -45°± 10°.

En particulier, les premier et deuxième angles sont de signe opposé et ont des valeurs absolues égales, de préférence à 45°± 10°.

Il est également proposé une installation d'émission/réception radiofréquence comportant deux systèmes selon l'invention tels que décrits ci-avant, dans laquelle les réseaux d'antennes actives des deux systèmes présentent des antennes actives auxiliaires en commun.

De façon optionnelle, l'installation comporte deux paires de systèmes dont les réseaux d'antennes actives sont agencés en octogone irrégulier.

L'octogone régulier comprend quatre côtés principaux sur lesquels sont distribuées les antennes actives principales et quatre côtés auxiliaires sur lesquels sont distribuées les antennes actives auxiliaires et pour chaque côté auxiliaire, toutes les antennes auxiliaires sont en commun avec deux réseaux adjacents.

Il est également proposé un procédé d'émission/réception radiofréquence, selon la revendication 17.

Il est également proposé un programme d'ordinateur téléchargeable depuis un réseau de communication et/ou enregistré sur un support lisible par ordinateur, selon la revendication 18.

L'invention sera mieux comprise à l'aide de la description qui va suivre, donnée uniquement à titre d'exemple et faite en se référant aux dessins annexés dans lesquels :

[Fig. 1] la **figure 1** est une vue schématique de l'architecture d'un système d'émission/réception radiofréquence selon un premier mode de réalisation de l'invention ;

[Fig. 2] la **figure 2** est un exemple de mise en œuvre d'un réseau d'antennes actives reconfigurables selon le premier mode de réalisation ;

[Fig. 3] la **figure 3** est une vue agrandie de la partie rayonnante d'une antenne active reconfigurable selon la figure 2 ;

[Fig. 4] la **figure 4** illustre des diagrammes de rayonnement d'une antenne active reconfigurable selon la figure 3 dans deux configurations distinctes ;

[Fig. 5] la **figure 5** illustre un procédé d'émission radiofréquence mis en œuvre par le système de la figure 1 ;

[Fig. 6] la **figure 6** est un exemple de mise en œuvre d'une variante de réalisation de l'invention dans laquelle les antennes du réseau ne sont pas configurables ;

[Fig. 7] la **figure 7** illustre des résultats de simulation comparant la consommation énergétique d'un réseau linéaire par sections selon la figure 6 par rapport à un réseau linéaire conventionnel ;

[Fig. 8] la **figure 8** illustre des résultats de simulation comparant la consommation énergétique d'un réseau d'antennes linéaire par sections selon la figure 2 pour différentes configurations des antennes ;

[Fig. 9] la **figure 9** illustre une installation d'émission radiofréquence selon un deuxième mode de réalisation de l'invention ;

[Fig. 10] la **figure 10** illustre une installation d'émission radiofréquence selon un troisième mode de réalisation de l'invention ;

[Fig. 11] la **figure 11** illustre un système d'émission/réception radiofréquence selon un quatrième mode de réalisation de l'invention ; et

[Fig. 12] la **figure 12** illustre des résultats de simulation de la consommation énergétique d'un réseau linéaire à antennes reconfigurables suivant deux configurations distinctes selon le quatrième mode de réalisation.

Premier mode de réalisation

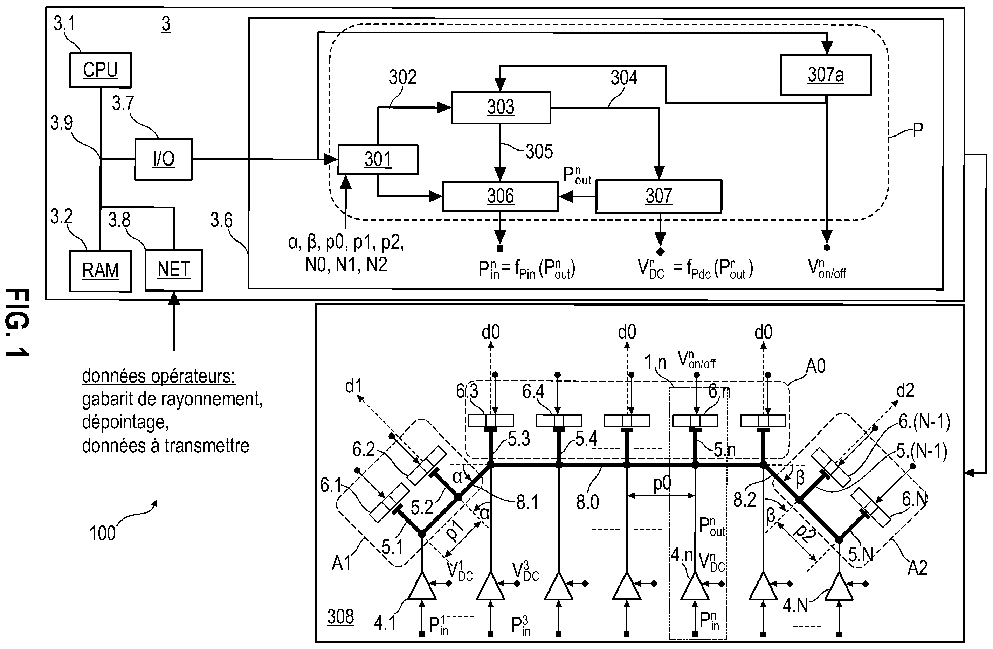

En référence à la **figure 1,** un système 100 d'émission radiofréquence selon un premier mode de réalisation de l'invention va être décrit.

Ce système 100 comporte tout d'abord un réseau 308 d'antennes actives {1.n}, le réseau comprenant N antennes élémentaires dites antennes actives, où *n* désigne un entier naturel compris entre 1 et N.

Par la suite, l'expression « antenne active » désignera toute antenne élémentaire du réseau 308 comprenant un élément rayonnant, par exemple de type planaire ou dipolaire, et un amplificateur configuré pour exciter l'élément rayonnant. Ainsi, le terme « antenne » sera réservé exclusivement pour désigner l'antenne élémentaire et non pas le réseau.

Chaque antenne active 1.n du réseau 308 comprend un élément rayonnant 5.n et un amplificateur 4.n dédié, tel qu'un amplificateur de puissance en émission, pour exciter l'élément rayonnant en amplitude et en phase. De manière générale, plusieurs éléments rayonnants pourraient être associés à un même moyen d'amplification pour être excités de la même manière.

Ainsi, le réseau 308 permet, de manière générale, de générer un rayonnement selon un ou plusieurs faisceaux.

Dans l'exemple décrit, un seul faisceau unidirectionnel radiofréquence est destiné à être émis par le réseau 308. Ce faisceau unidirectionnel présente ainsi un diagramme de rayonnement comprenant un lobe principal orienté selon une direction privilégiée et des lobes secondaires. Ce faisceau est reconfigurable dans le sens où ses caractéristiques de rayonnement peuvent être ajustées en modifiant les excitations appliquées à l'élément rayonnant de tout ou partie des antennes actives (i.e. loi de pondération en amplitude et/ou en phase des sources associées).

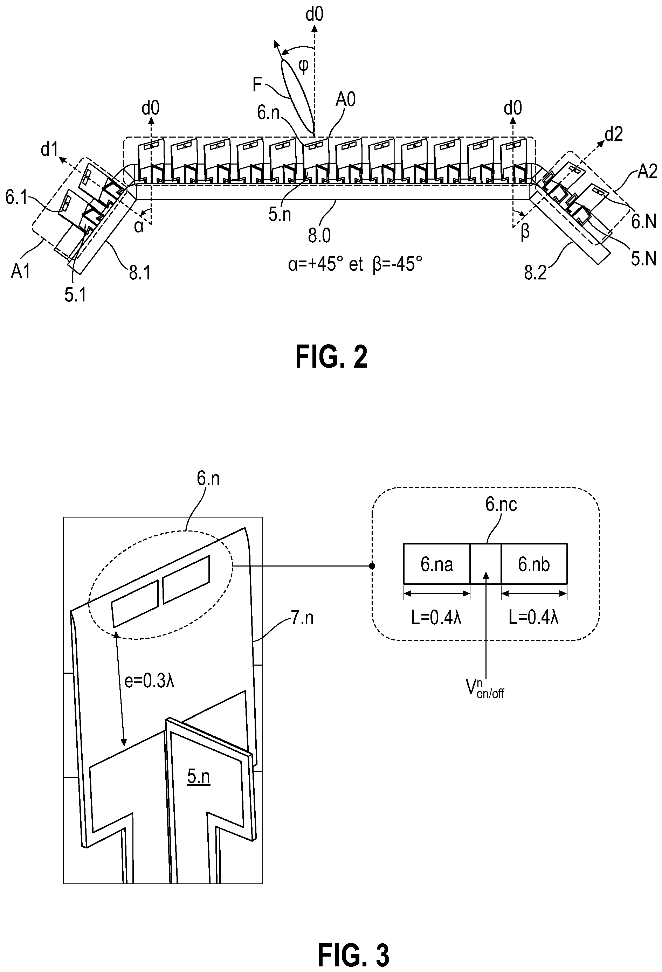

De manière optionnelle, chaque antenne active 1.n est reconfigurable, c'est-à-dire qu'elle comporte en outre des éléments parasites 6.n respectivement associés aux éléments rayonnants 5.n, de manière à modifier une directivité de l'élément rayonnant associé. Un exemple d'élément parasite sera décrit plus en détail en référence à la figure 3 ci-après. Dans d'autres modes de réalisation, des éléments parasites pourraient être prévus seulement pour certains éléments rayonnants, les autres en étant dépourvus de sorte que leur directivité n'est pas modifiable. Par la suite, l'expression « antenne reconfigurable » désignera une antenne active comprenant un élément parasite.

Plus précisément, le réseau 308 comprend un groupe principal A0 d'antennes actives orientées selon une direction principale d0, ainsi que, de manière générale, un ou plusieurs autres groupes d'antennes actives orientées selon des directions respectives différentes de la direction principale d0. Par la suite, ces autres groupes seront désignés « groupes auxiliaires ». Dans l'exemple décrit, le réseau 308 comporte deux groupes auxiliaires A1, A2, dont les antennes actives respectives sont orientées dans des directions dites auxiliaires d1, d2 respectives. Comme cela sera expliqué plus en détail par la suite, les directions auxiliaires d1, d2 sont différentes l'une de l'autre.

Plus précisément, la direction principale d0 et la première direction auxiliaire d1 forment un premier angle aigu $\alpha$, tandis que la direction principale d0 forme avec la deuxième direction auxiliaire d2 un deuxième angle aigu $\beta$.

Ainsi, $\alpha = \widehat{\vec{d_0}, \vec{d_1}}$, $\beta = \widehat{\vec{d_0}, \vec{d_2}}$, où la fonction $\widehat{\vec{x}, \vec{y}}$ fournit la valeur de l'angle trigonométrique formé entre deux vecteurs x et y en affectant un signe + ou un signe - à la valeur de l'angle pour désigner respectivement le sens trigonométrique (+) et anti-trigonométrique (-). Par définition, un angle aigu a une valeur comprise entre 0 et 90°.

En particulier, le premier angle aigu $\alpha$ a une valeur comprise entre +30° et +50°, de préférence égale à +45°$\pm$ 10°, tandis que le deuxième angle aigu $\beta$ a une valeur comprise entre -30° et -50°, de préférence égale à -45°$\pm$ 10°.

De manière générale, les premier et deuxième angles $\alpha$ et $\beta$ sont de signes opposés, si bien que les première et deuxième directions auxiliaires d1 et d2 sont orientées de part et d'autre de la direction principale d0. Ainsi, les première et deuxième directions auxiliaires ne sont pas parallèles entre elles.

Dans l'exemple décrit, les premier et deuxième angles aigus $\alpha$ et $\beta$ ont une même valeur absolue (i.e. $|\alpha|=|\beta|$) égale à 45°$\pm$ 10°. Cette valeur pourra être ajustée suivant le diagramme de rayonnement de chacune des antennes actives considérée et/ou suivant une valeur de dépointage maximale souhaitée pour dépointer le faisceau émis par le réseau d'antennes actives par rapport à la direction principale d0.

De manière générale, le groupe principal A0 comporte N0 antennes actives, tandis que les premier et deuxième groupes auxiliaires A1, A2 comportent respectivement N1 et N2 antennes actives. De préférence, N1 et N2 sont tous les deux strictement inférieurs à N0. Dit autrement, les antennes auxiliaires de chaque groupe sont moins nombreuses que les antennes principales.

Chaque nombre d'antennes auxiliaires N1, N2 pourra être choisi en fonction du nombre d'antennes principales N0, de manière à modifier la direction du faisceau dépointé émis par le réseau 308.

Dans l'exemple décrit, chaque antenne active 1.n dispose d'un seul élément rayonnant 5.n. Dans ce cas, on assimile chaque nombre d'antennes N0, N1, N2 au nombre d'éléments rayonnants respectivement dans chaque groupe A0, A1, A2 d'antennes actives.

Le nombre N0 d'antennes dans le groupe principal A0 et les nombres N1, N2 d'antennes auxiliaires dans les groupes auxiliaires A1, A2 sont déterminés de sorte qu'un rapport N1/N0 et/ou N2/N0 est compris entre 1/7 et 1/3, tel que : [Math 1]

$$\frac{1}{7} \leq \frac{N1}{N0} \leq \frac{1}{3} \; ; et/ou \frac{1}{7} \leq \frac{N2}{N0} \leq \frac{1}{3}.$$

Dans l'exemple décrit, les deux groupes auxiliaires A1, A2 ont un même nombre d'antennes N1=N2 désigné N12 qui est strictement inférieur à N0 et plus particulièrement compris entre 1/8 et 1/4 du nombre total d'antennes du réseau d'antennes actives Nt=N0+N1+N2=N0+2.N12, tel que : [Math2]

$$\frac{Nt}{8} \leq N12 \leq \frac{Nt}{4}.$$

De manière générale, les éléments rayonnants sont distribués au sein de chaque groupe d'antennes A0, A1, A2 avec un pas propre au groupe, notés respectivement p0 pour le groupe principal A0 et p1, p2 pour les premier et deuxième groupes auxiliaires A1, A2. Par la suite, on désignera par « pas », l'espacement entre deux éléments rayonnants consécutifs dans chaque groupe d'antennes ou de manière équivalente la distance entre deux antennes adjacentes.

Dans l'exemple décrit, les éléments rayonnants dans chaque groupe A0, A1, A2 sont distribués respectivement selon une droite distincte et suivant un même pas p, tel que p0=p1=p2=0,5.λ, où λ désigne la longueur d'onde de fonctionnement de l'antenne ou de manière équivalente la longueur d'onde du faisceau émis par le réseau en supposant que chaque antenne émet à la même longueur d'onde.

Dans d'autres modes de réalisation (non représentés), les éléments rayonnants de chaque groupe d'antennes actives pourront être distribués sur une surface plane suivant une matrice en deux dimensions présentant un pas respectif px, py selon deux dimensions distinctes.

De manière générale, le pas, le nombre d'antennes actives dans chaque groupe et le nombre d'éléments parasites pourront être choisis en fonction du faisceau à émettre.

Le système 100, plus précisément le réseau 308, comporte un support 8 d'antennes conçu pour fixer les éléments rayonnants des antennes actives.

De manière générale, le support 8 comporte une section respective pour chaque groupe d'antennes. Dans l'exemple décrit, le support comporte une section principale 8.0 pour le groupe principal A0, une première section auxiliaire 8.1 et une deuxième section auxiliaire 8.2 respectivement pour les premier et deuxième groupes auxiliaires A1, A2.

Dans une variante de réalisation (non illustré), les antennes actives sont réparties en deux groupes, *i.e.* un groupe principal A0 et un groupe auxiliaire A1 ou A2, si bien que le support comprend deux sections, *i.e* une section principale et une section auxiliaire.

Dans l'exemple décrit, chaque section 8.0, 8.1, 8.2 du support est linéaire par rapport aux éléments rayonnants, dans le sens où la section du support définit une droite le long de laquelle les éléments rayonnants du groupe d'antennes correspondant sont distribués. Ainsi, la distribution linéaire de l'ensemble des éléments rayonnants sur les sections multiples du support définit une topologie dite « linéaire par sections ». Ainsi, on qualifiera par la suite un tel réseau de linéaire par sections.

De manière générale, la section principale 8.0 forme avec la première section auxiliaire 8.1 un angle égal au premier angle α tel que défini en référence à la figure 1. La section principale 8.0 forme avec la deuxième section auxiliaire 8.2 un angle égal au deuxième angle β tel que défini en référence à la figure 1 ou 2. Dans l'exemple décrit, α=+45° et β=-45°.

De manière générale, les éléments rayonnants sont montés perpendiculairement au support, si bien qu'ils s'étendent suivant une direction perpendiculaire au support.

Selon un autre mode de réalisation (non représenté), chaque section du support est plane par rapport aux éléments rayonnants des antennes actives, de sorte que les éléments rayonnants sont distribués selon une matrice en deux dimensions sur cette section de support plane.

Le système 100 comporte en outre un dispositif de commande 3 du réseau 308 d'antennes actives.

Le dispositif de commande 3 comporte tout d'abord un module de traitement et de contrôle 301 prévu pour fournir des paramètres de rayonnement pour chaque faisceau à émettre, à partir de données reçues d'un ou plusieurs opérateurs mobiles. En particulier, ces données comprennent la direction de rayonnement du faisceau et son gabarit associé ainsi que le flux de données à transmettre. Cette direction de rayonnement peut être exprimée sous la forme d'une valeur de dépointage par rapport à une direction par défaut, e.g. la direction principale d0 du réseau 308.

Le dispositif de commande 3 comporte en outre un module de calcul 303 prévu pour déterminer un jeu d'amplitudes et de phases pour l'ensemble des faisceaux destinés à alimenter les antennes actives du réseau 308. Le module de calcul 303 est configuré pour fournir, sur une première sortie, le jeu d'amplitudes 304 et sur une deuxième sortie, le jeu d'amplitudes et de phases 305.

Le dispositif de commande 3 comporte en outre un module de polarisation 307 (ou module d'alimentation) prévu pour l'alimentation des amplificateurs 4.1,...,4.n,...,4.N du réseau 308 d'antennes actives. Ce module de polarisation 307 est conçu pour déterminer et appliquer une tension de polarisation $V^n_{DC}$ à chaque amplificateur 4.n.

Le dispositif de commande 3 comporte en outre un module de génération de signaux 306 prévu pour déterminer la puissance destinée à être appliquée à l'entrée de chaque amplificateur 4.n, dite puissance d'entrée $P^n_{in}$.

Le dispositif de commande 3 comporte en outre un module de pilotage 307a prévu pour piloter de manière sélective chacun des éléments parasites en lui appliquant une tension de commutation. Par exemple, cette tension de commutation est sélectionnée parmi deux tensions de référence $V^n_{ON}$ et $V^n_{OFF}$.

Dans l'exemple décrit, le dispositif de commande 3 comporte un ordinateur comprenant un processeur 3.1, une mémoire principale 3.2 associée au processeur, par exemple de type RAM (*Random Access Memory* en anglais), un disque dur 3.6 sur lequel est stocké un programme informatique P, un port d'entrée/sortie 3.7, une interface de communication 3.8 et un bus de communication 3.9 reliant ces éléments.

Le programme informatique P comprend des instructions de code exécutable conçues pour être chargées dans la mémoire principale 3.2 afin d'être exécutées par le processeur 3.1 pour la mise en œuvre des modules logiciels décrits précédemment.

Alternativement, tout ou partie des modules précédents pourraient être implémentés par des circuits électroniques, par exemple micro-câblés, ne faisant pas intervenir de programme d'ordinateur.

La **figure 2** illustre, en trois dimensions, les éléments rayonnants 5.1,...5.n,...5.N et les éléments parasites 6.1,...6.n,...6.N respectivement associés. Comme décrit ci-avant en référence à la figure 1, les éléments rayonnants sont distribués sur le support 8 selon une topologie dite « linéaire par sections ».

Dans cet exemple, les éléments rayonnants 5.1,...,5.n,...,5.N de chaque groupe d'antennes A0, A1, A2 sont des dipôles fixés perpendiculairement à la surface du support 8.

Le support 8 peut être conçu en seul un bloc ou bien en plusieurs parties agencées les unes aux autres de sorte que les première et deuxième sections auxiliaires 8.1, 8.2 sont inclinées par rapport à la section principale 8.0, respectivement selon les premier et deuxième angles α, β, tels que définis précédemment en référence à la figure 1.

Le support 8 est conçu de sorte que l'inclinaison des sections auxiliaires 8.1, 8.2 par rapport à la section principale 8.0 peut être ajustée, par exemple d'une jonction déformable entre chaque section auxiliaire 8.1, 8.2 et la section principale 8.0 de manière à ajuster la valeur des premier et deuxième angles α, β.

Dans l'exemple décrit, les sections auxiliaires 8.1, 8.2 sont inclinées de 45° par rapport à la section principale 8.0, si bien que la direction principale d0 forme avec les première et deuxième directions auxiliaires d1, d2, respectivement un angle α=+45° et β=-45°. De manière avantageuse, les antennes des sections auxiliaires facilitent ainsi le dépointage du faisceau à +45° et à -45° par rapport à la direction principale d0, et en pratique même au-delà de ces valeurs.

De manière générale, le faisceau émis F est dépointé d'un angle φ par rapport à la direction principale d0. Les directions auxiliaires d1, d2 (respectivement les angles α et β) sont déterminées en fonction de la valeur maximale de l'angle de dépointage φ, en particulier φ=α=β en valeur absolue.

Comme illustré sur la figure 2, la section principale 8.0 comprend douze dipôles, tandis que les sections auxiliaires 8.1, 8.2 comprennent chacune deux dipôles, soit un total de 16 antennes actives. Cette répartition d'antennes est telle que N2/N0=N1/N0=1/6 et vérifie la relation $\frac{1}{7} \leq \frac{N1}{N0} = \frac{N2}{N0} \leq \frac{1}{3}$ [Math1] telle qu'énoncée précédemment.

Le réseau 308 d'antennes actives dispose d'un nombre de dipôles suffisant dans la section principale 8.0 pour former un faisceau avec des propriétés de rayonnement similaires à celles qui seraient obtenues par un réseau linéaire classique notamment en termes d'ouverture passante à -3dB (*Half Power Beamwidth* en anglais), de directivité et de balayage du faisceau. De manière avantageuse, les dipôles des sections auxiliaires 8.1, 8.2. facilitent le dépointage du faisceau avec un rayonnement maximum à +45° pour le premier groupe auxiliaire A1 et à -45° pour le deuxième groupe auxiliaire A2.

Dans l'exemple décrit, chaque élément rayonnant est un dipôle croisé 5.n tel qu'illustré sur la **figure 3.** Ce dipôle comprend deux structures rayonnantes en forme de T entrecroisées à 90° l'une de l'autre, dans lequel chaque structure en forme de T est dédiée à une polarisation distincte.

Chacune des deux structures rayonnantes en forme de T du dipôle 5.n est associée à un élément parasite 6.n distinct pour chaque polarisation, au moyen d'une plaque de support 7.n formée d'un matériau diélectrique. L'élément parasite 6.n pourra également être dénommé élément directeur dans le sens où il est permet de modifier la directivité du dipôle 5.n.

Pour ne pas surcharger les figures 2 et 3, l'élément parasite 6.n est représenté uniquement pour une seule polarisation, c'est-à-dire en association avec une seule des deux structures en forme de T du dipôle 5.n. En pratique, l'élément parasite 6.n comprend en outre une structure similaire à celle représentée mais perpendiculaire à l'autre structure en forme de T du dipôle 5.n.

Dans l'exemple décrit, l'élément parasite 6.n comprend deux sous-éléments parasites distincts 6.na, 6.nb disposés sur la plaque de support 7.n, dans le même plan que celui du dipôle 5.n.

Chaque sous-élément parasite 6.na, 6.nb est formé d'une surface métallique présentant une longueur L environ égale à 0.4λ et espacée du dipôle 5.n d'une distance e environ égale à 0.3λ, où λ désigne la longueur d'onde de fonctionnement du dipôle.

Dans l'exemple illustré, chaque sous-élément parasite 6.na, 6.nb a la forme d'une surface longiforme. Toutefois, d'autres formes pourront être utilisées pour les éléments parasites, en fonction des propriétés de rayonnement souhaitées. Par exemple, l'élément parasite pourra être segmenté ou présenter des extrémités incurvées.

Pour chaque élément parasite 6.n associé à une antenne active, les sous-éléments 6.na, 6.nb sont reliés entre eux au moyen d'un commutateur contrôlé en tension par le module de pilotage 307b des éléments parasites, de manière à connecter ou déconnecter les deux sous-éléments 6.na, 6.nb entre eux en fonction de la tension de commutation $V^n_{ON}$, $V^n_{OFF}$ appliquée au commutateur et ainsi reconfigurer le diagramme de rayonnement de chaque antenne active de sorte que le rayonnement de l'antenne active soit plus ou moins directif.

Dans l'exemple illustré, le commutateur est une diode PIN (*Positive Intrinsic Negative* en anglais) 6.nc. Le module de pilotage 307a décrit ci-avant en référence à la figure 1 est conçu pour sélectivement piloter chacune des diodes PIN. Par exemple, en appliquant une tension continue non nulle aux bornes de la diode PIN 6.nc, les deux sous-éléments parasites 6.na, 6.nb sont reliés électriquement entre eux et en l'absence de cette tension, ces deux sous-éléments parasites sont déconnectés l'un de l'autre.

La diode PIN se comporte comme un interrupteur ouvert ou fermé, en fonction de la tension appliquée à ses bornes. Ainsi, sous l'application d'une tension de commutation $V^n_{ON}$ supérieure ou égale à une tension de seuil (e.g. non nulle) aux bornes de la diode PIN 6.nc, la diode se comporte comme un interrupteur fermé ayant pour effet de relier électriquement les deux sous-éléments parasites 6.na, 6.nb qui interagissent par couplage électromagnétique avec l'élément rayonnant 5.n auquel il est associé de manière à modifier l'ouverture (ou la directivité) du diagramme de rayonnement de l'antenne active concernée.

Au contraire, lorsqu'une tension de contrôle $V^n_{OFF}$ inférieure ou égale à une autre tension de seuil nulle (e.g. 0V), est appliquée aux bornes de la diode PIN 6.nc, les deux sous-éléments parasites 6.na, 6.nb sont déconnectés l'un de l'autre. Ainsi, chaque sous-élément isolé n'est plus susceptible d'être suffisamment excité pour modifier significativement le diagramme de rayonnement de l'élément rayonnant associé du fait de sa trop petite dimension électrique.

Par exemple, l'application de la tension de commutation $V_{ON}$ aux bornes de la diode PIN 6.nc s'effectue au moyen d'une source de tension continue qui est par exemple distincte de la source d'alimentation utilisée pour alimenter les amplificateurs (i.e. puissance d'entrée $P^n_{in}$, tension de polarisation $V^n_{DC}$).

De manière avantageuse, l'implantation de diode PIN 6.nc dans le substrat de l'élément parasite 6.n est simple et peu coûteuse à mettre en œuvre. Par ailleurs, la diode PIN 6.nc présente un temps de réponse ultra-court permettant de reconfigurer très rapidement le diagramme de rayonnement élémentaire de chaque antenne active. Cette propriété est particulièrement avantageuse dans le cadre d'un balayage électronique de faisceau entre une station de base et un terminal mobile en déplacement où les temps de latence requis sont de l'ordre de 10 à 20 μs pour reconfigurer le faisceau.

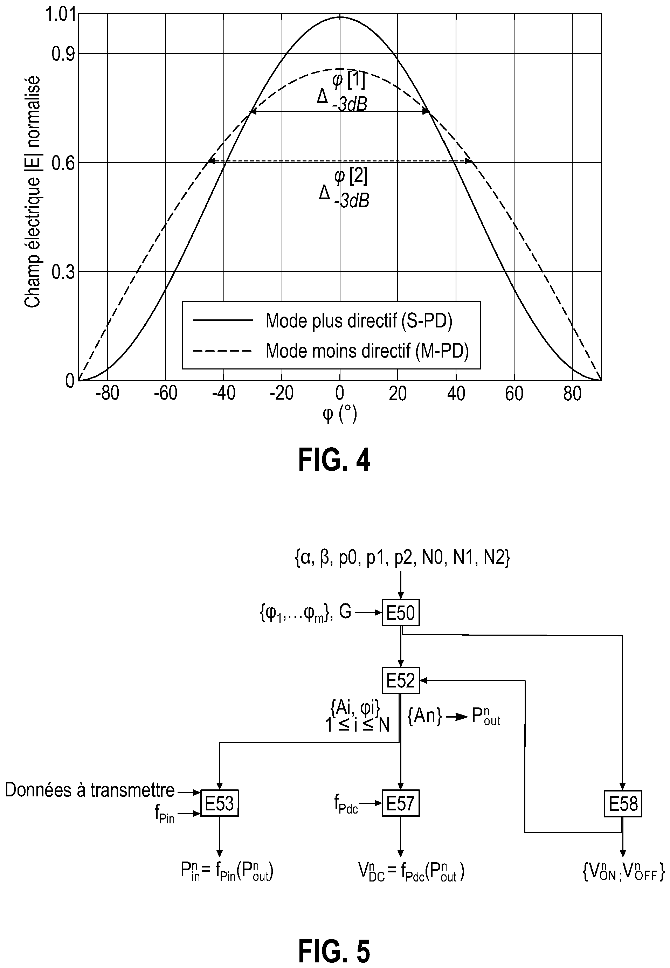

La **figure 4** illustre le diagramme de rayonnement théorique d'une antenne reconfigurable du type de celle illustrée à la figure 3.

Chaque antenne reconfigurable du réseau 308 peut être considérée comme une source élémentaire dans le sens où elle comprend un élément rayonnant excité par un amplificateur et associé à un élément parasite piloté par une source électrique comme décrit précédemment.

Dans l'exemple décrit, l'antenne reconfigurable présente deux états de directivité ou de manière équivalente deux ouvertures à 3 dB distinctes ($\Delta\varphi_{-3dB}$).

Par définition, la directivité exprime la capacité d'une antenne à rayonner la puissance fournie à ses bornes dans des directions privilégiées de l'espace. Plus précisément, la directivité $D(\theta, \varphi)$, appelée parfois gain directif, est définie comme le rapport entre son intensité de rayonnement dans la direction $(\theta, \varphi)$ et celle (uniforme) de l'antenne isotrope qui rayonne la même puissance. Généralement, le terme « directivité » sous-entend la directivité maximale.

Pour les antennes directives, la directivité maximum est approximée par [Math 3]: $D = \dfrac{4\pi}{\Omega_A} = \dfrac{41253}{\Delta^{\theta}_{-3dB} \cdot \Delta^{\varphi}_{-3dB}}$ où $\Delta^{\theta}_{-3dB}, \Delta^{\varphi}_{-3dB}$ sont les angles d'ouvertures à demi-puissance respectivement dans le plan horizontal $\pi_\theta$ et le plan azimutal $\pi_\varphi$ et exprimés en degrés. Ainsi, la directivité D est inversement proportionnelle à l'ouverture.

Comme illustré par la courbe en trait plein sur la figure 4, un premier diagramme de rayonnement de l'antenne reconfigurable correspond à une première ouverture $\Delta^{\varphi[1]}_{-3dB}$ égale à 66° caractérisant un premier état de directivité de l'antenne, lorsque qu'une première tension de commutation $V^n_{ON}$ est appliquée par le module de pilotage 307a à la diode PIN 6.nc.

Comme illustré par la courbe en trait pointillé, un deuxième diagramme de rayonnement de l'antenne reconfigurable correspond à une deuxième ouverture $\Delta^{\varphi[2]}_{-3dB}$ égale à 90° caractérisant un deuxième état de directivité, lorsqu'une deuxième tension de commutation $V^n_{OFF}$ (e.g. $V^n_{OFF}=0V$) est appliquée par le module pilotage 307a à la diode PIN 6.nc.

Par la suite, le premier état de directivité de l'antenne sera qualifié de mode plus directif (S-PD), dans la mesure où il présente une ouverture inférieure à celle du deuxième état de directivité qui sera alors qualifié de mode moins directif (S-MD), i.e. $\Delta^{\varphi[1]}_{-3dB} < \Delta^{\varphi[2]}_{-3dB}$ [Math 4]. Dans ce cas, chaque antenne reconfigurable selon le mode plus directif est assimilée à une source élémentaire plus directive (S-PD) tandis que chaque antenne reconfigurable selon le mode moins directif est assimilée à une source élémentaire plus directive (S-PD) comme indiqué dans la légende de la figure 4.

Ainsi, en appliquant une tension appropriée aux bornes de chaque diode PIN 6.nc de manière sélective pour chaque antenne active, le diagramme de rayonnement de l'antenne est rendu plus ou moins directif.

Dans l'exemple de la figure 4, l'ouverture du diagramme de rayonnement de l'antenne peut être augmentée de 24° rendant ainsi l'antenne moins directive. Ainsi, chaque antenne active formée par l'association de l'élément parasite 6.n à l'élément rayonnant 5.n est reconfigurable dans le sens où la directivité de l'antenne active (ou son ouverture) peut être modifiée en fonction de la tension de commande reçue du module de pilotage 307a.

Comme indiqué par les champs électriques illustrés sur la figure 4 (ou de manière équivalente par les diagrammes de rayonnement correspondants), l'antenne est unidirectionnelle dans le sens où elle émet ou reçoit un rayonnement essentiellement dans une seule direction dite direction principale. Dans l'exemple de la figure 4, le diagramme de rayonnement, plus un ou moins ouvert, présente un seul lobe qui est orienté dans une même et seule direction (e.g. $\varphi=0°$). De préférence, chaque antenne du réseau d'antennes actives est unidirectionnelle.

Un procédé d'émission radiofréquence selon l'invention va maintenant être décrit en référence à la **figure 5.**

Dans l'exemple décrit, le procédé est mis en œuvre dans le système d'émission radiofréquence 100 décrit en référence à la figure 1.

Lors d'une étape initiale E50, le dispositif de commande 3 récupère des paramètres géométriques du réseau 308 d'antennes actives, tels que les premier et deuxième angles $\alpha$, $\beta$, les pas p0, p1, p2 et les nombres N0, N1, N2 d'antennes dans chaque groupe A0, A1, A2 d'antennes actives préalablement stockés sur le disque dur 3.6.

Lors de l'étape initiale E50, le dispositif de commande 3 reçoit via l'interface de communication 3.8 des paramètres relatifs au rayonnement, tels que des valeurs de dépointage $\varphi_1,...\varphi_m$ et un gabarit G de rayonnement à respecter pour le faisceau à émettre ainsi que des données effectives à transmettre par le réseau 308 d'antennes actives.

Par exemple, le gabarit de rayonnement définit pour le lobe principal de rayonnement, un niveau de puissance maximal dans une direction privilégiée non définie et définit pour les lobes secondaires, un niveau puissance sur une ouverture angulaire $\Delta\varphi_{SLL}$ de part et d'autre du lobe principal.

Par exemple, une valeur $\varphi$ de dépointage telle décrite en référence à la figure 2 est reçue par le dispositif de commande 3, cette valeur définissant la direction privilégiée de rayonnement du faisceau émis après application du dépointage.

Les paramètres rayonnement sont fournis simultanément en entrée du module de traitement et de contrôle 301 et du module de pilotage 307a. Sur la base de ces données, le module de traitement et de contrôle 301 détermine au moins des contraintes de rayonnement qu'il transmet au module de calcul 303.

Sur réception des contraintes de rayonnement et des paramètres géométriques, le module de calcul 303 calcule le jeu d'amplitudes et de phases $\{A_i, \Phi_i\}_{1\leq i\leq N}$, également désigné par loi de pondération en amplitude et en phase, lors d'une étape de calcul E52.

Lors d'une étape de polarisation E57, le module de polarisation 307 détermine la tension de polarisation $V^n_{DC}$. de chaque amplificateur 4.n en fonction de la puissance de sortie $P^n_{out}$ définie en fonction du jeu d'amplitudes $\{A_i\}_{1\leq i\leq N}$ fournies 304 par le module de calcul 303.

A cet effet, le module de polarisation 307 utilise une fonction de polarisation $f_{Pdc}$ permettant de calculer une tension de polarisation en fonction de la puissance $P^n_{out}$ en sortie de l'amplificateur, telle que $V^n_{DC}=f_{Pdc}(P^n_{out})$. Cette fonction $f_{Pdc}$ est élaborée préalablement pour caractériser chaque amplificateur.

Dès lors que la tension de polarisation est déterminée, le module de polarisation 307 l'applique à l'amplificateur concerné.

Lors d'une étape d'alimentation E53, le module de génération de signaux 306 calcule pour chaque amplificateur 4.n la puissance d'entrée $P^n_{in}$ à appliquer en entrée de l'amplificateur en tenant compte des données à transmettre.

A cet effet, le module d'alimentation 306 utilise une fonction $f_{Pin}$ préalablement stockée et propre à chaque amplificateur permettant de déterminer la puissance d'entrée $P^n_{in}$ correspondant à la puissance de sortie déterminée, telle que $P^n_{in}=f_{Pin}(P^n_{out})$.

Lors d'une étape de pilotage E58, le module de pilotage 307a détermine une tension de commutation à appliquer sélectivement à chaque élément parasite de manière à modifier la directivité de l'antenne active, par exemple selon le mode plus directif ou le mode moins directif et le module de pilotage 307a applique chaque tension de commutation $V^n_{ON}$ ou $V^n_{OFF}$ de manière sélective à la diode PIN contrôlant chaque élément parasite.

Les tensions de commutation sont calculées par le module de pilotage 307a à partir du nombre de faisceaux à émettre et de la valeur de dépointage pour chaque faisceau. Par exemple, le module de pilotage 307a est conçu pour appliquer la tension $V_{ON}$ aux éléments parasites des antennes principales sur la section principale 8.0 et la tension $V_{OFF}$ aux éléments parasites des antennes auxiliaires sur les première et deuxième sections auxiliaires 8.1, 8.2. Ainsi, les antennes principales sont configurées dans le mode plus sélectif tandis que les antennes auxiliaires sont configurées dans le mode moins sélectif.

Dans d'autres variantes de réalisation, seulement un sous-ensemble des antennes principales et/ou un sous-ensemble des antennes auxiliaires sont reconfigurées dans le mode plus sélectif ou moins sélectif.

Comme décrit ci-dessus, le module de pilotage 307a est conçu pour calculer les tensions de commande suivant une configuration des éléments parasites, en fonction de la valeur de dépointage du faisceau considéré. A cet effet, plusieurs configurations sont par exemple prédéterminées en association à différentes valeurs de dépointage. Par exemple, cette association est stockée dans une table de référence ou base de données, ou tout autre support de stockage, à laquelle accède le module de pilotage 307a. L'élaboration de cette table sera décrite ultérieurement.

A l'issue de l'étape de pilotage E58, le module de pilotage 307a envoie au module de calcul 303 une information indiquant quel mode a été appliqué à chaque antenne active reconfigurable parmi le mode plus directif ou le mode moins directif.

Ainsi, pour chaque antenne active, le dispositif de commande 3 fournit à chaque amplificateur une puissance d'entrée $P^n_{in}=f_{Pin}(P^n_{out})$, une tension de polarisation $V^n_{DC}=f_{Pdc}(P^n_{out})$ et pilote l'élément parasite de l'antenne active reconfigurable en appliquant une tension $V^n_{ON}$ ou $V^n_{OFF}$.

D'après ce qui précède, le module de calcul 303 détermine donc une loi de pondération en amplitudes des antennes en tenant compte de la configuration appliquée aux éléments parasites par le module de pilotage 307a, de manière à éteindre un plus grand nombre d'antennes et ainsi optimiser la consommation énergétique du réseau pour un diagramme de rayonnement donné. Autrement dit, les états de directivité des antennes qui sont ajustés par l'application des tensions de commutation aux éléments parasites est un paramètre d'entrée supplémentaire de l'algorithme utilisé par le module de calcul 303 pour le calcul de la loi de pondération.

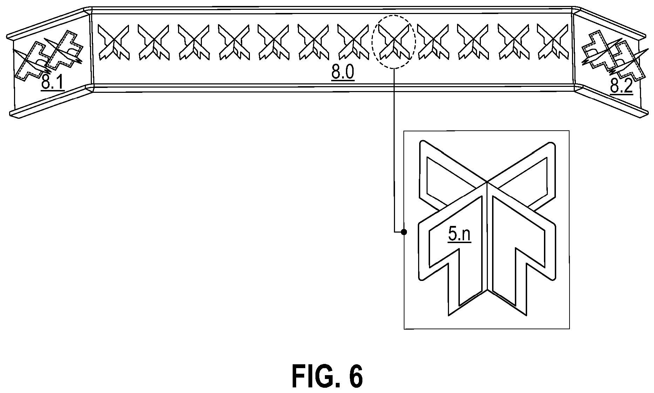

La **figure** 6 illustre une variante de réalisation de la figure 2, où aucun élément parasite n'est associé aux dipôles 5.1,...,5.n,...,5.N, si bien que les antennes ne sont pas reconfigurables.

Performances énergétiques (1$^{er}$ mode de réalisation)

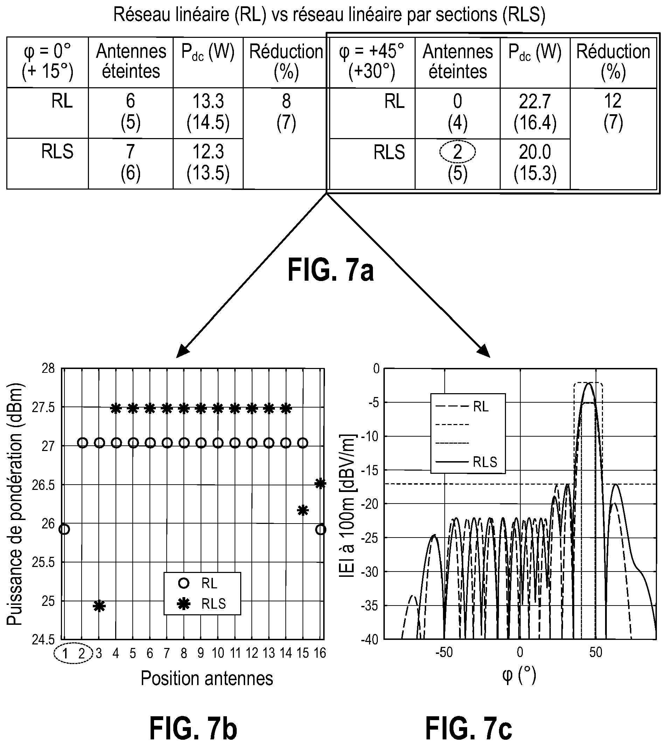

Les inventeurs ont comparé, au moyen de simulations, la consommation énergétique d'un réseau d'antennes actives présentant une topologie linéaire par sections désigné par RLS du premier mode de réalisation selon la variante de réalisation de la figure 6 (i.e. avec des antennes actives non reconfigurables ne comprenant pas d'éléments parasites) à celle d'un réseau linéaire conventionnel désigné par RL, de manière à quantifier l'apport de l'invention (i.e. topologie linéaire par sections) en terme d'efficacité énergétique. Par « réseau linéaire conventionnel », on comprend un réseau ne comprenant pas d'antennes auxiliaires, i.e. pas de sections auxiliaires inclinées par rapport à la section principale. Les résultats de ces simulations vont être maintenant décrits en référence à la **figure 7.**

Les résultats de simulation présentés dans ce document sont obtenus pour un même diagramme de rayonnement cible du faisceau émis ou même gabarit de rayonnement défini notamment par une puissance isotrope rayonnée équivalente (PIRE= 53 dBm), un niveau d'atténuation des lobes secondaires inférieur à -15 dB par rapport à au lobe principal (SLL : *Side Lobe Level* en anglais) et une ouverture passante à mi-puissance (HPBW : *Half Power Beamwidth* en anglais) inférieure ou égale à 10°. Le faisceau est émis à une fréquence centrale $f_0$=3,6 GHz. Le réseau d'antennes actives comprend 16 éléments rayonnants distribués sur le support avec un pas constant $p=0,5\lambda_0$.

Les résultats sont obtenus en appliquant le procédé de configuration développé dans la demande de brevet antérieure FR1912812 pour le calcul de la loi de pondération en amplitude des antennes actives du réseau. Ce procédé de configuration met en œuvre un algorithme d'optimisation minimisant une norme convexe d'un vecteur de pondération. La minimisation prend en compte des contraintes de rayonnement du faisceau et une contrainte de puissance intrinsèque aux amplificateurs du réseau de sorte que chaque amplificateur fonctionne dans un régime linéaire, en prenant compte éventuellement des conditions de couplage entre antennes, de conditions d'impédances actives, de conditions de parcimonie groupée pour l'émission simultanée de plusieurs faisceaux radiofréquences.

Comme décrit ci-avant en référence aux figures 1 et 5, le dispositif de commande 3 détermine la loi de pondération en amplitudes, et par conséquent les antennes éteintes et les antennes allumées, en tenant compte de la configuration des éléments parasites et détermine également pour les antennes allumées la puissance d'entrée $P^n_{in}$ et la tension de polarisation $V^n_{DC}$ à appliquer aux amplificateurs.

Par exemple, le module de calcul 303 est configuré pour calculer la loi de pondération x (ou de manière équivalente un jeu d'excitations complexes) à appliquer aux antennes. Ce calcul consiste à résoudre un problème d'optimisation exprimé par l'équation 1 ci-dessous visant à minimiser une norme convexe (e.g. de type $L_1$) du vecteur de pondération x, de manière à réduire la consommation énergétique du réseau d'antennes active, par exemple au moyen d'un algorithme d'optimisation convexe itératif :

$$\text{Equation 1}: \min_{\mathbf{x}} \|\mathbf{x}\|_1 \text{ sous } C_\theta(x) = \begin{cases} C4: \ max|x_i|^2 \leq P_{i,max} \\ C1: \ \left| \mathbf{a}^H(\theta_o)\mathbf{x} \right| \geq E_{inc} \\ C2: \ max\left(\left| \mathbf{a}^H(\Theta_{HPBW})\mathbf{x} \right|\right) \leq \frac{E_{inc}}{\sqrt{2}} \\ C3: \ max\left(\left| \mathbf{a}^H(\Theta_{SLL})\mathbf{x} \right|\right) \leq \rho * E_{inc} \end{cases}$$

avec les définitions suivantes : *min* désigne la Fonction de minimisation ; *max* désigne la Fonction « maximum » ; $\|\mathbf{x}\|_1$ désigne la norme convexe $L_1$ du vecteur de pondération x définie par $\|\mathbf{x}\|_1 = \sum_{i=1}^N |x_i|$ ; $|\mathbf{x}|$ désigne le module du vecteur de pondération x ; $P_{i,max}$ désigne la puissance maximale de sortie admissible par l'amplificateur associé à la $i^{ème}$

antenne du réseau d'antennes ; $\mathbf{a} = [a_1(\theta),...,a_N(\theta)]$ est le vecteur directionnel dont chacune des composantes est définie par $a_n(\theta) = |E_n(\theta)|\, e^{i.k.d.sin\,\theta}$ avec $k = 2\pi/\lambda$ où $E_n(\theta)$ désigne le diagramme de rayonnement élémentaire réel de la $n^{ème}$ antenne du réseau, $\lambda$ désigne la longueur d'onde du rayonnement dans le vide et d désigne l'espacement entre deux antennes consécutives du réseau ; $\mathbf{a^H}$ désigne la transposée conjuguée du vecteur directionnel a ; $\theta_o$ désigne la direction de rayonnement principal ; $\Theta_{HPBW}$ désigne la plage angulaire associée à l'ouverture à mi-puissance ; $\Theta_{SLL}$ désigne la plage angulaire associée aux lobes secondaires ; $\rho$ désigne le rapport entre l'amplitude du premier lobe secondaire et l'amplitude du lobe principal ; $E_{inc}$ désigne le niveau maximal du champ électrique rayonné, tel que $E_{inc} = (30 \times PIRE)^{0,5}/r$, où r désigne la distance en espace libre et en champ lointain qui sépare le point où le champ est mesuré et l'antenne d'émission ; $C_\theta(x)$ désigne l'ensemble des contraintes du problème d'optimisation à résoudre de manière à déterminer la loi de pondération du réseau d'antennes.

Comme décrit ci-avant, chaque élément parasite est piloté de manière sélective par le module de pilotage 307a qui est configuré pour calculer et appliquer une tension de commande $V^i_{on/off}$ à chaque élément parasite, ce qui a pour effet de modifier la directivité des antennes.

Cette modification est prise en compte par le module de calcul 303 qui est configuré pour modifier le diagramme de rayonnement élémentaire réel $E_i(\theta)$ de chacune des antennes, en fonction des informations fournies par le module de pilotage 307a indiquant l'état de directivité sélectionné pour reconfigurer les antennes.

Comme décrit ci-avant, le module de pilotage 307a détermine la configuration de chacun des éléments parasites en fonction de paramètres relatifs au diagramme de rayonnement du réseau d'antennes tels que l'angle de dépointage du faisceau. De manière générale, cette configuration consiste à sélectionner pour chacune des antennes un état de directivité parmi au moins deux états de directivité distincts (e.g. un état de directivité plus directif et un état de directivité moins directif).

Comme décrit précédemment, en fonction de l'angle de dépointage du faisceau souhaité, le module pilotage 307a est par exemple conçu pour reconfigurer les antennes selon l'une des configurations suivantes :

- Configuration plus directive (S-PD) : l'état plus directif est appliqué à l'ensemble des antennes du réseau pour des faibles dépointages, c'est-à-dire lorsque la valeur de l'angle de dépointage du faisceau reçue est comprise au moins entre - 15° et +15°, c'est-à-dire égale à 0°±15° ;

- Configuration moins directive (S-MD) : l'état moins directif est appliqué à l'ensemble des antennes du réseau pour de forts dépointages, c'est-à-dire lorsque la valeur de l'angle de dépointage du faisceau reçue est comprise au moins entre -35° et -55° ou entre +35° et +55°. Ainsi, on remarquera que le mode moins directif (S-MD) est en particulier utilisé pour un dépointage de ±45°.

Alternativement, lorsque la valeur de l'angle de dépointage du faisceau reçue est entre -35° et -55° ou entre +35° et +55°, le module de pilotage 307a est conçu pour configurer les antennes selon une configuration mixte (S-PD & S-MD), à la place de la configuration moins directive (S-MD). Selon cette configuration mixte, une partie des antennes est configurée selon l'état plus directif tandis que les autres antennes sont configurées selon l'état moins directif. En effet, cette configuration mixte peut permettre l'extinction d'un plus grand nombre d'antennes que la configuration moins directive (S-MD). En particulier, dans le cas d'un réseau linéaire par sections, les antennes de la section principale (comme la section principale 8.0 de la figure 1) sont configurées selon le mode moins directif S-MD tandis que les antennes de chaque section auxiliaire (comme les sections auxiliaires 8.1, 8.2 de la figure 1) sont configurées selon le mode plus directif S-PD.

Par exemple, pour déterminer ces configurations, plusieurs configurations ont été préalablement testées en les appliquant à l'algorithme exécuté par le module de calcul 303 comme décrit ci-avant. Pour un gabarit de faisceau et un angle de dépointage donnés, la configuration retenue est celle pour laquelle la loi de pondération obtenue comprend un maximum de composantes nulles ou proches de 0, de sorte qu'un nombre maximum d'antennes puissent être éteintes afin de réduire la consommation énergétique du réseau d'antennes le plus possible.

La liste des configurations ci-dessus est fournie à titre illustratif mais n'est pas limitative. En fonction du réseau d'antennes et/ou des contraintes de rayonnement, l'Homme du Métier pourra trouver d'autres configurations optimales pour réduire la consommation énergétique.

La topologie linéaire par sections du réseau d'antennes actives, telle que proposée dans la présente invention, permet de réduire la consommation énergétique du réseau. Cette réduction a été estimée dans le cas particulier où la loi de pondération en amplitude est calculée selon l'algorithme d'optimisation de la demande de brevet antérieure. Toutefois, l'homme du métier pourra s'attendre à des résultats similaires en appliquant au système d'émission/réception selon la présente invention d'autres méthodes d'optimisation connues de l'art antérieur pour le calcul de la loi de pondération en amplitude.

Ces résultats indiquent dans le tableau de la figure 7 (Fig. 7a), pour chaque type de réseau (RL, RLS), le nombre d'antennes éteintes *(Antennes Off)*, la puissance d'alimentation totale $P_{dc}$ du réseau d'antennes actives exprimée en Watts (W), cette puissance correspondant à la somme des puissances d'alimentation appliquées aux amplificateurs des antennes actives non éteintes et la réduction de consommation électrique exprimée en pourcentage (%) pour différentes valeurs de dépointage φ du faisceau : 0°, +15°, +45°, +30°.

Ces résultats indiquent également (Fig. 7b) pour chaque type de réseau (RL, RLS), la puissance de pondération exprimée en dBm correspondant à la puissance de sortie $P^n_{out}$ de chaque amplificateur 4.n telle que déterminée par le procédé selon la figure 5 pour chacune des 16 antennes du réseau, cette puissance étant appliquée à l'élément rayonnant de l'antenne active concernée.

Ces résultats indiquent également (Fig. 7c) pour chaque type de réseau (RL, RLS), les diagrammes de rayonnement obtenus avec les puissances de pondérations calculées (Fig. 7b). Ces diagrammes sont représentés par le module du champ électrique en ordonnée, désigné par |E| et exprimé en dBV/m, en fonction de la valeur de l'angle φ exprimé en degrés en abscisse.

Sans dépointage du faisceau, i.e. pour une valeur de dépointage reçue φ égale à 0°, ces résultats démontrent que la topologie linéaire par sections (RLS) permet d'éteindre un plus grand nombre d'antennes (7 au total) que la topologie linéaire classique (6 au total) comme rapporté dans le tableau (a) de la figure 7. Il s'ensuit que la puissance d'alimentation totale $P_{dc}$ du réseau est de 12,3 W pour la topologie linéaire par sections (RLS), contre 13,3 W pour la topologie linéaire classique (RL). Ainsi, la topologie linéaire par sections permet d'atteindre une réduction d'environ 8% de la consommation énergétique du réseau d'antennes actives par rapport à une topologie linéaire classique (RL). Ces résultats s'appliquent pour une valeur de dépointage égale à 0° et plus généralement à des valeurs de dépointages faibles comprises entre -10° et 10°, autrement dit pour une valeur de dépointage φ=0°±10°.

Pour une valeur de dépointage reçue φ égale à +15°, les résultats montrent que la topologie linéaire par sections (RLS) permet d'éteindre un plus grand nombre d'antennes (6 au total) que la topologie linéaire classique (5 au total) comme rapporté dans le tableau (a) de la figure 7. Il s'ensuit que la puissance d'alimentation totale $P_{dc}$ du réseau est de 13,5 W pour la topologie linéaire par sections (RLS), contre 14,5 W pour la topologie linéaire classique (RL). Ainsi, la topologie linéaire par sections permet d'atteindre une réduction d'environ 7% de la consommation énergétique du réseau d'antennes actives par rapport à une topologie linéaire classique (RL).

De manière plus générale, les inventeurs ont démontré que, pour des valeurs de dépointage φ reçues faibles, c'est-à-dire comprises entre 0° et +15° (ou entre 0° et -15°), le réseau linéaire par sections (RLS) selon le principe de l'invention permet d'éteindre plus d'antennes actives en comparaison avec le réseau linéaire (RL) permettant d'atteindre des baisses de consommation énergétique du réseau d'antennes actives de l'ordre de 7 à 8%.

Pour une valeur de dépointage φ égale à +45°, les résultats montrent que la topologie linéaire par sections (RLS) permet d'éteindre un plus grand nombre d'antennes (au total 2) que la topologie linéaire classique (aucune antenne éteinte). Selon la loi de pondération calculée (Fig. 7b), les antennes n°1 et 2 sont éteintes. Il s'ensuit que le réseau selon la topologie linéaire par sections (RLS) consomme une puissance d'alimentation totale $P_{dc}$ de 20 W, contre 22,7 W pour la topologie linéaire classique (RS), ce qui correspond à une réduction de 12% de la consommation énergétique en faveur du réseau linéaire par sections (RLS).

Ces comparaisons ont été élaborées pour des conditions de rayonnement équivalentes, i.e. telles que le diagramme de rayonnement du faisceau émis par le réseau d'antennes actives respecte un même gabarit de rayonnement (Fig. 7c).

Pour une valeur de dépointage φ égale à +30°, les résultats montrent que la topologie linéaire par sections (RLS) permet d'éteindre un plus grand nombre d'antennes (au total 5) que la topologie linéaire classique (au total 4). Il s'ensuit que le réseau selon la topologie linéaire par sections (RLS) consomme une puissance d'alimentation totale $P_{dc}$ de 15,3 W, contre 16,4 W pour la topologie linéaire classique (RS), ce qui correspond à une réduction de 7% de la consommation énergétique en faveur du réseau linéaire par sections (RLS).

De manière plus générale, il est démontré que, pour des valeurs de dépointage φ reçues élevées, c'est-à-dire comprises entre +30° et +45° (ou entre -30° et -45°), le réseau linéaire par sections (RLS) selon le principe de l'invention permet d'éteindre plus d'antennes actives en comparaison avec le réseau linéaire (RL) permettant d'atteindre des baisses de consommation énergétique du réseau d'antennes actives de l'ordre de 7% à 12%.

Ainsi, au vu de ce que précède, il apparaît clairement que l'orientation particulière des antennes auxiliaires par rapport aux antennes principales selon une topologie linéaire par sections (RLS) permet avantageusement de réduire le nombre d'antennes éteintes dans le réseau d'antennes actives et de réduire la consommation énergétique du réseau d'antennes actives d'autant plus que la valeur de dépointage du faisceau est élevée par rapport à une topologie linéaire conventionnelle (RS).

Les inventeurs ont également comparé, au moyen de simulations, la consommation énergétique d'un réseau d'antennes actives présentant une topologie linéaire par sections (RLS) selon le premier mode de réalisation de la figure 2, pour les deux configurations d'antennes suivantes :

- une configuration homogène des antennes, c'est-à-dire où toutes les antennes actives du réseau sont configurées selon le mode plus directif de la figure 4 (désigné par S-PD); et

- une configuration mixte des antennes, c'est-à-dire où seulement une partie des antennes actives est configurée selon le mode plus directif, tandis que les autres antennes sont configurées selon le mode moins directif de la figure 4 (désigné par S-MD & S-PD).

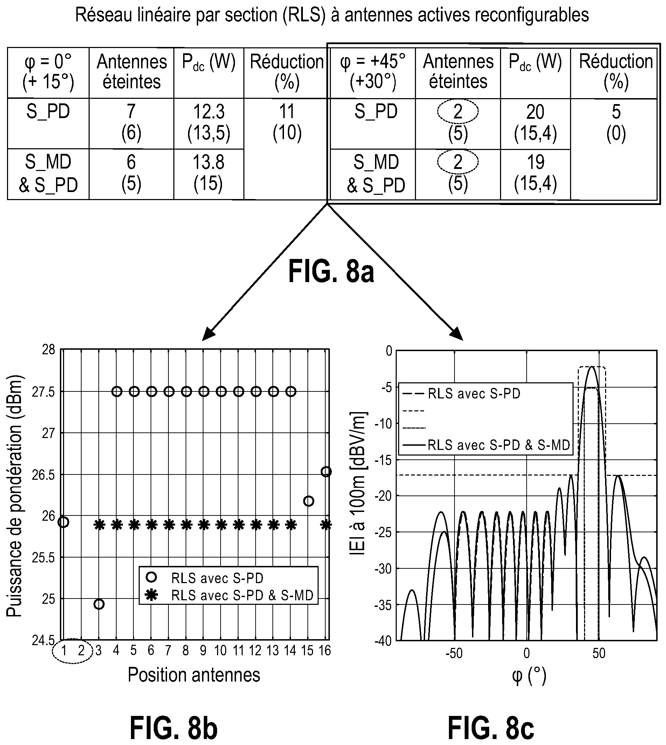

Les résultats de ces simulations mettent en évidence l'apport de l'invention en termes d'efficacité énergétique. Ces résultats vont être maintenant décrits en référence à la **figure 8,** où les grandeurs présentées correspondent exactement aux mêmes que celles de la figure 7 telles que décrites ci-avant.

Dans le cadre de ces simulations, on considère :

- une configuration homogène particulière, où toutes les antennes du réseau, i.e. les antennes de la section principale 8.0 et les antennes des sections auxiliaires 8.1, 8.2. sont configurées selon le mode plus directif S-PD ; et

- une configuration mixte particulière, où les antennes de la section principale 8.0 sont configurées selon le mode moins directif S-MD tandis que les antennes des sections auxiliaires 8.1, 8.2 sont configurées selon le mode plus directif S-PD.

Sans dépointage du faisceau, i.e. pour une valeur de dépointage $\varphi$ reçue égale à 0°, les résultats (Fig. 8a) démontrent que la configuration homogène S-PD permet d'éteindre un plus grand nombre d'antennes (7 au total) que la configuration mixte S-MD & S-PD (6 au total). Il s'ensuit que la puissance d'alimentation totale $P_{dc}$ est de 12,3 W pour la configuration homogène dans le mode plus directif S-PD, contre 13,8 W pour la configuration mixte S-MD & S-PD. Ainsi, pour des valeurs de dépointage faibles (i.e. comprises entre -10° et +10°), la configuration homogène des antennes reconfigurées dans le mode plus directif (S-PD) permet avantageusement d'atteindre une réduction d'environ 11% de la consommation énergétique du réseau par rapport à la configuration mixte.

Pour une valeur de dépointage reçue $\varphi$ égale à +15°, les résultats (Fig. 8a) démontrent que la configuration homogène S-PD permet d'éteindre un plus grand nombre d'antennes (6 au total) que la configuration mixte S-MD & S-PD (5 au total). Il s'ensuit que la puissance d'alimentation totale $P_{dc}$ est de 13,5 W pour la configuration homogène S-PD, contre 15 W pour la configuration mixte S-MD & S-PD. Ainsi, la configuration homogène des antennes reconfigurables dans le mode plus directif permet avantageusement de réduire d'environ 10% la consommation énergétique du réseau par rapport à la configuration mixte.

De manière plus générale, il est démontré que, pour des valeurs de dépointage $\varphi$ reçues faibles, c'est-à-dire comprises entre 0° et +15°, ou entre 0° et -15°, en reconfigurant toutes les antennes actives reconfigurables dans le mode plus directif (S-PD), il est possible de réduire de 10 à 11% la consommation énergétique du réseau.

Pour une valeur de dépointage $\varphi$ du faisceau égale à +45°, les résultats (Fig. 8a) démontrent que les deux configurations permettent d'éteindre un même nombre d'antennes (égal à 2) mais que la configuration mixte S-MD & S-PD permet d'atteindre une meilleure efficacité énergétique que la configuration homogène S-PD.

Plus précisément, les antennes n°1 et 2 sont éteintes pour les deux configurations (Fig. 8(a)) mais les puissances de pondération (dBm) sont de l'ordre de 26 dBm pour la configuration mixte tandis qu'elles ne sont supérieures, i.e. de l'ordre de 27,5 dBm pour la configuration homogène (Fig. 8(b)). Il s'ensuit que le réseau d'antennes actives présente une puissance d'alimentation totale $P_{dc}$ de 19 W pour la configuration mixte S-MD & S-PD, contre 20 W pour la configuration homogène S-PD, ce qui correspond à une réduction de 5% de la consommation énergétique du réseau d'antennes actives en faveur de la configuration mixte.

Ces comparaisons ont été élaborées pour des conditions de rayonnement équivalentes, i.e. telles que le diagramme de rayonnement du faisceau émis par le réseau d'antennes actives respecte un même gabarit de rayonnement (Fig. 8c).

Pour une valeur de dépointage $\varphi$ reçue égale à +30°, les résultats (Fig. 8a) montrent que les deux configurations permettent d'éteindre un même nombre d'antennes (égal à 5) avec une même puissance d'alimentation totale $P_{dc}$ est de 15,4 W, si bien qu'à cette valeur de dépointage, la configuration mixte S-PD & S-MD ne permet pas de réduire la consommation énergétique par rapport à la configuration homogène S-PD.

De manière plus générale, les inventeurs ont démontré que pour des valeurs de dépointage $\varphi$ reçues élevées, c'est-à-dire égales à +45°±10° ou égales à -45°±10°, il est préférable d'appliquer une configuration mixte (S-MD & S-PD) des antennes actives reconfigurables du réseau, de manière à réduire la consommation énergétique du réseau.

Ainsi, au vu des résultats de la Fig. 8, il apparaît clairement que la modification sélective de la directivité de chaque antenne au moyen des éléments parasites permet avantageusement d'accroître encore plus l'efficacité énergétique d'un réseau linéaire par sections pour émettre un faisceau selon un gabarit donné. Autrement dit, la reconfigurabilité des antennes constitue un levier supplémentaire pour réduire la consommation totale consommée $P_{dc}$ par le réseau d'antennes actives tout en respectant le gabarit donné.

Deuxième mode de réalisation

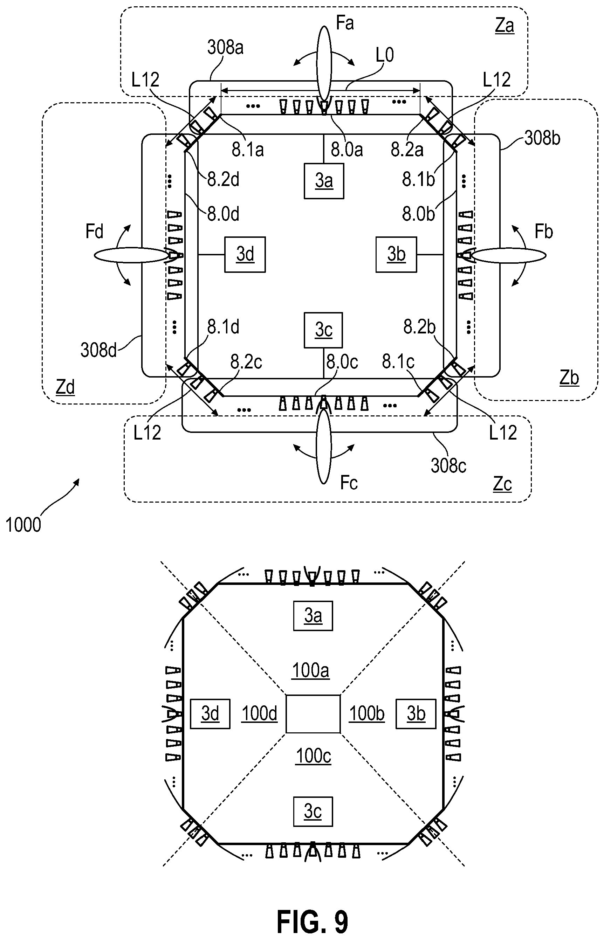

Un deuxième de réalisation de l'invention va maintenant être décrit en référence à la **figure** 9 qui illustre une installation 1000 d'émission/réception radiofréquence conçue pour émettre/recevoir simultanément quatre faisceaux radiofréquence Fa, Fb, Fc, Fd, adaptés à couvrir respectivement quatre zones de couverture distinctes Za, Zb, Zc, Zd. Au sein de chaque zone de couverture, le faisceau respectif a une direction de rayonnement ajustable à l'intérieur de la zone de couverture par balayage électronique. Cette direction peut être ajustée de $\pm 45°$ par rapport à une direction par défaut, correspondant respectivement à la direction principale pour chaque système.

A cet effet, l'installation comprend quatre systèmes selon l'invention agencés en octogone. Plus précisément, chaque système 100a, 100b, 100c, 100d comprend un réseau 308a, 308, 308c, 308d d'antennes actives et un dispositif de commande 3a, 3b, 3c, 3d du réseau d'antennes actives, tels que décrits précédemment en référence aux figures 1 et 2.

Les quatre faisceaux Fa, Fb, Fc, Fd peuvent être reconfigurés individuellement par les dispositifs de commande 3a, 3b, 3c, 3d respectifs qui peuvent être opérés indépendamment les uns des autres.

Pour chaque réseau 308a, 308b, 308c, 308d, la première section auxiliaire 8.1a, 8.1b, 8.1c, 8.1d, portant les éléments rayonnants du premier groupe auxiliaire A1 d'antennes auxiliaires forme un angle égal au premier angle $\alpha=+45°$ avec la section principale 8.0a, 8.0b, 8.0c, 8.0d portant les éléments rayonnants du groupe principal A0 d'antennes.

De même, pour chaque réseau 308a, 308b, 308c, 308d, la deuxième section auxiliaire 8.2a, 8.2b, 8.2c, 8.2d, portant les éléments rayonnants du deuxième groupe A2 d'antennes auxiliaires forme un angle égal au deuxième angle $\beta=-45°$ avec la section principale 8.0a, 8.0b, 8.0c, 8.0d portant les éléments rayonnants du groupe principal A0 d'antennes.

Les supports d'antennes sont agencés bout à bout de manière à former un octogone irrégulier. Plus précisément, les sections principales 8.0a, 8.0b, 8.0c, 8.0d de chaque réseau 308a, 308b, 308c, 308d sont de même longueur L0 et agencées parallèlement deux à deux de manière à former les côtés principaux de l'octogone irrégulier, tandis que les sections auxiliaires {8.2a, 8.1b}, {8.1a, 8.2d}, {8.1d, 8.2c}, {8.1c, 8.2b} de deux réseaux adjacents {308a, 308d}, {308a, 308b}, {308c, 308b}, {308c, 308d} sont agencées deux à deux de sorte à être alignées selon une droite respective pour former chacune des quatre côtés auxiliaires de l'octogone irrégulier, chaque côté auxiliaire ayant une même longueur L12 inférieure à la longueur des côtés principaux, i.e. telle que L12<L0.

Contrairement à un octogone régulier, l'installation 1000 selon la structure octogonale irrégulière telle que décrite ci-dessous présente des côtés longs correspondant aux sections principales et des côtés courts correspondant aux sections auxiliaires. De manière avantageuse, l'installation 1000 selon l'invention présente une grande facilité de dépointage de chaque faisceau à $\pm 45°$, voire même au-delà de $\pm 45°$ avec une directivité élevée tout en réduisant le nombre d'antennes actives allumées.

Dans l'exemple décrit, les premier et troisième systèmes 100a, 100c comprennent chacun sept antennes actives principales sur leur section principale 8.0a, 8.0c et deux antennes auxiliaires sur chacune de leurs deux sections auxiliaires 8.1a, 8.2a, 8.1c, 8.2c. Les deuxième et quatrième systèmes 100b, 100d comprennent chacun sept antennes actives principales sur leur section principale 8.0b, 8.0d et une antenne auxiliaire sur chacune de leurs deux sections auxiliaires 8.1b, 8.2b, 8.1d, 8.2d.

Le nombre d'antennes actives auxiliaires réparties sur les sections auxiliaires des réseaux d'antennes actives sera sélectionné en fonction du balayage souhaité, i.e. l'ouverture couverte en dépointage. Ainsi, pour chaque réseau, cette ouverture sera d'autant plus étendue que le nombre d'antennes auxiliaires disposées sur ses sections auxiliaires est grand.

Dans des variantes de réalisation (non représentées), les quatre réseaux disposeront d'un nombre d'antennes auxiliaires identiques N2=N1 sur leurs sections auxiliaires.

Chaque réseau peut comprendre des éléments parasites de manière à modifier la directivité (ou l'ouverture) de tout ou partie des antennes actives comme décrit précédemment.

Chacun des quatre systèmes d'émission radiofréquence fonctionne selon le procédé tel que décrit ci-avant en référence à la figure 5.

Ainsi, pour chacune des quatre zones à couvrir Za, Zb, Zc, Zd, chaque système 100a, 100b, 100c, 100d reçoit les flux de données effectives à transmettre à des terminaux mobiles se trouvant dans les zones respectives, ainsi que le nombre de faisceaux, le gabarit de rayonnement et une valeur de dépointage du faisceau associé. Chaque système commande les antennes actives en alimentant les amplificateurs ($P^n_{in}$, $V^n_{DC}$) et éventuellement en pilotant les éléments parasites associés ($V^n$ON/OFF), comme décrit ci-avant.

Il apparaît clairement qu'un système d'émission/réception radiofréquence tel que celui décrit précédemment permet au réseau d'antennes actives de dépointer un faisceau à un moindre coût énergétique, le rendant ainsi moins énergivore tout en bénéficiant d'une agilité de dépointage accrue (notamment pour des valeurs de dépointage de l'ordre de $\pm 45°$).

L'agencement de plusieurs de ces systèmes pour former une installation telle que celle décrite ci-avant permet de dépointer à moindre coût énergétique simultanément plusieurs faisceaux dans des zones de couverture différentes.

Troisième mode de réalisation

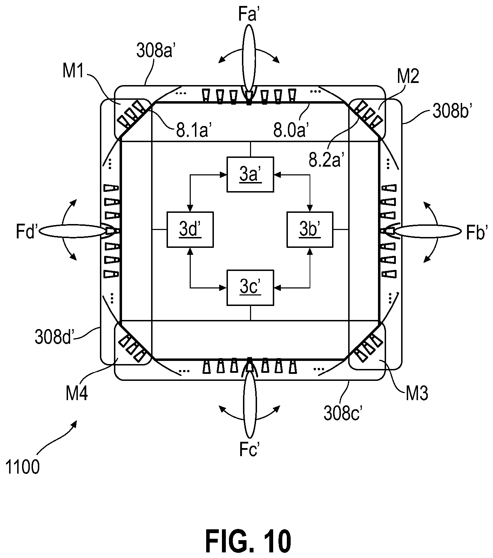

Un troisième mode de réalisation de l'invention va être maintenant décrit en référence à la **figure** 10 qui illustre une installation d'émission/réception radiofréquence 1100 similaire à celle de la figure 9, à la différence que toutes les antennes actives auxiliaires disposées sur chaque côté auxiliaire de l'octogone irrégulier sont mutualisées entre deux réseaux adjacents.

L'installation 1100 comporte quatre systèmes d'émission/réception radiofréquence tel que décrit ci-avant. Les réseaux 308a' ; 308b' ; 308c' ; 308d' d'antennes actives de ces quatre système sont agencés bout à bout de manière à former un octogone irrégulier. Les antennes actives principales sont distribuées sur quatre côtés principaux de l'octogone tandis que les antennes actives auxiliaires sont distribuées sur quatre côtés auxiliaires de l'octogone.

En fonction des valeurs de dépointage et des gabarits de rayonnement reçus, le dispositif de commande 3a', 3b', 3c', 3d' de chaque réseau 308a', 308b', 308c, 308d d'antennes actives calcule la loi de pondération en amplitudes et en phases des antennes et détermine, pour chaque antenne active, des paramètres de configuration tels que la puissance d'entrée $P_{in}^{(n)}$ et la tension d'alimentation $V_{DC}^{(n)}$ à appliquer à l'amplificateur associé et dans le cas où l'antenne active auxiliaire est reconfigurable, la tension de commande de $V_{off/on}^{(n)}$ appliquée à l'élément parasite comme décrit ci-avant.

Contrairement au deuxième mode de réalisation décrit en référence à la figure 9, les antennes auxiliaires distribuées sur les côtés auxiliaires de l'octogone sont mutualisées pour chaque paire de réseaux adjacents (308a', 308d'), (308a', 308b'), (308b', 308c'), (308c', 308d').

Chaque dispositif de commande 3a', 3b', 3c', 3d', prend en compte les antennes auxiliaires mutualisées avec chaque réseau adjacent pour le calcul de la loi de pondération en amplitude et en phase utilisée pour déterminer les paramètres de configuration des antennes actives auxiliaires mutualisées.

Ainsi, l'installation d'émission/réception radiofréquence selon le troisième mode de réalisation est configurée de sorte que les antennes auxiliaires situées le long de chaque côté auxiliaire de l'octogone irrégulier sont mutualisées (ou partagées) entre deux réseaux adjacents, si bien que ces antennes auxiliaires mutualisées sont configurées de manière à contribuer à la formation des faisceaux destinés à être émis respectivement dans les deux zones de couverture adjacentes.

Dans l'exemple décrit, le réseau 308a' comprend une première section auxiliaire 8.1a' comportant un premier ensemble M1 de trois antennes auxiliaires formant un côté auxiliaire de l'octogone irrégulier. Ces trois antennes auxiliaires sont mutualisées entre les réseaux 308a' et 308d'. Ainsi, les pondérations en amplitude et en phases de ces trois antennes auxiliaires sont calculées selon un mode dit multifaisceaux, de sorte que leur rayonnement contribue conjointement à la formation du faisceau Fa' émis par le réseau 308a' et du faisceau Fd' émis par le réseau 308d' adjacent au réseau 308a'.

A cet effet, le dispositif de commande 3a' est adapté à se coordonner avec le dispositif de commande 3d' du réseau adjacent 308d' en tenant compte des caractéristiques de rayonnement du faisceau Fd' destiné à être émis par le réseau adjacent 308d' pour le calcul de la loi de pondération de ses antennes auxiliaires et inversement. Ainsi, la puissance appliquée à chaque antenne auxiliaire correspond au cumul de la puissance des signaux appliqués pour la formation des deux faisceaux Fa' et Fd'.

De même, un deuxième ensemble M2 d'antennes auxiliaires sont mutualisées entre le réseau 308a' et le réseau 308b' adjacent au réseau 308a'. Ainsi, le dispositif de commande 3a interagit avec le dispositif de commande 3b' du réseau 308b' adjacent au réseau 308a' de manière à calculer une loi de pondération en amplitudes et en phases des antennes actives auxiliaires mutualisées M2 adaptées pour former le faisceau Fa' et le faisceau Fb' destiné à être émis par le réseau 308b' adjacent au réseau 308a'.

Il en va de même pour chaque autre paire de réseaux adjacents pris deux à deux, i.e. {308b', 308c'}, {308c', 308a'} avec les ensembles d'antennes actives mutualisées M3, M4.

La mutualisation des antennes actives auxiliaires entre chaque paire de réseaux adjacents pour le calcul des lois de pondérations des antennes actives et la configuration des antennes actives est particulièrement avantageuse pour optimiser la consommation énergétique de l'installation d'émission/réception radiofréquence en permettant l'extinction d'antennes actives supplémentaires par rapport à la configuration selon le deuxième mode de réalisation.

Une telle mutualisation est particulièrement avantageuse dans le cas où l'installation d'émission/réception radiofréquence est utilisée pour émettre simultanément plusieurs faisceaux dans des directions différentes pour assurer une couverture étendue, notamment dans le cas de quatre faisceaux dont chacun est dépointé jusqu'à $\pm 45°$ de manière à assurer une couverture radiofréquence à 360°.

Dans l'exemple décrit, les dispositifs de commande 3a', 3b', 3c', 3d' sont interconnectés deux à deux de sorte que les antennes auxiliaires puissent être mutualisées entre deux réseaux d'antennes actives adjacents. Toutefois, dans des variantes de réalisation, ces dispositifs de commande pourront être mise en œuvre au sein d'un même dispositif de commande commun à l'ensemble des réseaux d'antennes actives.

Quatrième mode de réalisation

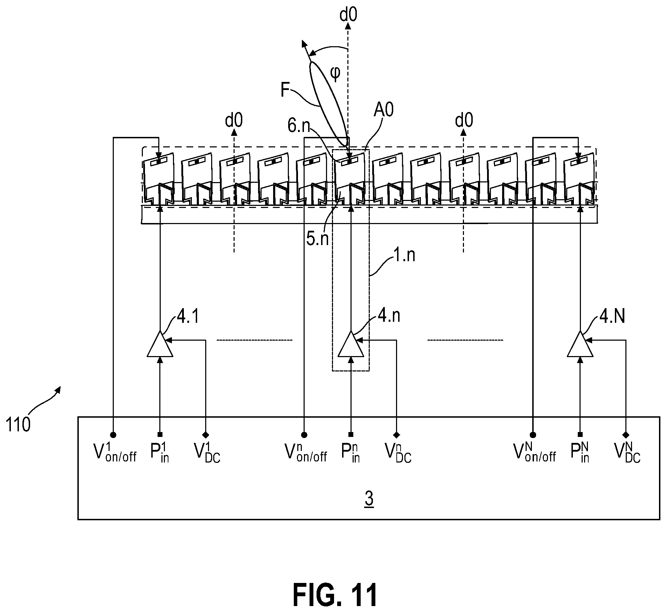

Un système d'émission/réception radiofréquence 110 selon un quatrième mode de réalisation de l'invention va maintenant être décrit en référence à la **figure 11.**

Comme dans le premier mode de réalisation décrit en référence aux figures 1 et 2, chaque antenne active 1.n comprend un élément rayonnant 5.n auquel est associé un élément parasite 6.n comprenant lui-même deux sous-éléments parasites comme déjà décrit en référence à la figure 3. Le système comprend un dispositif de commande 3 comme décrit précédemment.

Cet élément parasite est piloté par les moyens de pilotage 307a (e.g. diode PIN) de manière à ajuster la directivité de l'antenne correspondante selon les deux diagrammes de rayonnement déjà décrits en référence à la figure 4 correspondant au mode moins directif (S-MD) et au mode plus directif (S-PD) déjà décrits.

Le quatrième mode de réalisation se distingue du premier mode de réalisation en ce que le réseau d'antennes actives est linéaire (RL), dans le sens où les éléments rayonnants et les éléments parasites de chaque antenne active du réseau sont distribués selon une droite commune (i.e. distribution linéaire). Autrement dit, le réseau linéaire (RL) ne comporte qu'un seul groupe d'antennes actives, contrairement au réseau linéaire par sections (RLS) décrit en référence aux figures 1 et 2.

Ainsi, le dispositif de commande 3 détermine pour chaque antenne active reconfigurable 1.n, la puissance d'entrée $P^n_{in}$ et la tension de polarisation $V^n_{DC}$ de l'amplificateur 4.n ainsi que la tension de commande $V^n_{on/of}$ de l'élément parasite 6.n comme décrit précédemment.

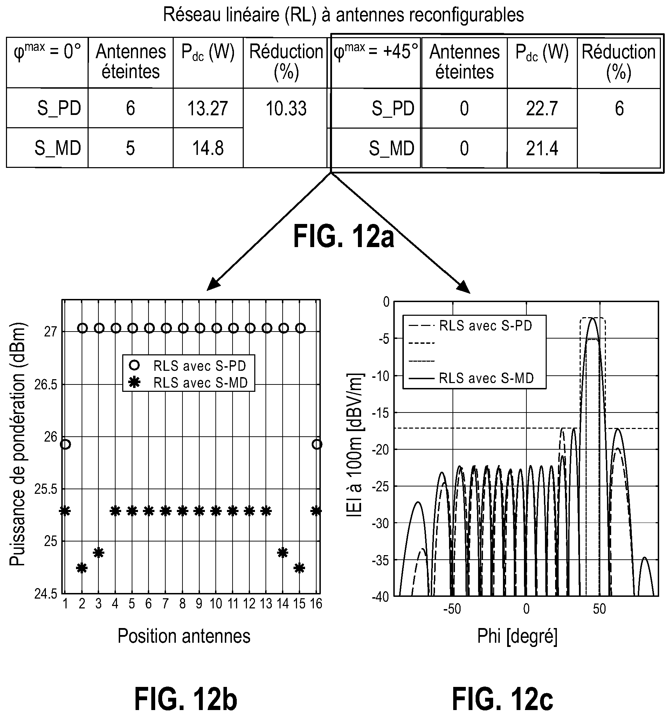

La **figure 12** illustre les résultats de simulations obtenus pour évaluer la consommation énergétique d'un réseau linéaire comprenant 16 antennes actives reconfigurables grâce aux éléments parasites selon l'invention.

Ces simulations ont été réalisées précisément dans les mêmes conditions de rayonnement et de dépointage et avec le même algorithme pour le calcul des excitations des antennes que ceux déjà décrits pour les simulations présentées pour le réseau linéaire par sections (RLS), en référence à la figure 8. La figure 11 présente les mêmes grandeurs que celles de la figure 8 déjà décrite.

Les inventeurs ont démontré que, pour des dépointages faibles, i.e. de l'ordre de 0° $\pm$ 15°, une configuration homogène de toutes les antennes dans le mode plus directif (S-PD) permet avantageusement d'éteindre un plus grand nombre d'antennes que lorsque toutes les antennes sont configurées dans le mode moins directif (S-MD).

Par exemple, comme présenté dans le tableau de la figure 12 (i.e. Fig. 12a), pour un angle de dépointage nul, i.e. $\varphi$=0°, la configuration des 16 antennes actives du réseau linéaire (RL) dans le mode plus directif (S-PD) permet d'éteindre au maximum 6 antennes contre 5 pour la configuration dans le mode moins directif (S-MD), ce qui correspond à une réduction de 10,33% de la puissance totale d'alimentation $P_{dc}$. Ces résultats restent valables pour de faibles valeurs de dépointage $\varphi$, c'est-à-dire pour des valeurs comprises entre -15° et +15°, en particulier égale à 0°.

Au contraire, les inventeurs ont démontré que, pour des dépointages élevés, i.e. de l'ordre de 45°$\pm$10°, la configuration homogène de toutes les antennes dans le mode moins directif (S-MD) permet avantageusement de réduire la puissance totale d'alimentation des amplificateurs par rapport au mode plus directif (S-PD).

Par exemple, comme présenté dans le tableau de la figure 12, pour un angle de dépointage $\varphi$=+45°, la configuration homogène des 16 antennes dans le mode moins directif (S-MD) permet avantageusement de réduire la puissance totale d'alimentation des amplificateurs $P_{dc}$ de 22.7 W à 21.4 W par rapport au cas où toutes les antennes sont configurées dans le mode plus directif (S-PD), ce qui correspond à une réduction de 6% de la puissance totale d'alimentation $P_{dc}$. De manière plus générale, ces résultats restent valables pour des valeurs de dépointage $\varphi$ élevées, c'est-à-dire comprises entre -35° et -55° ou entre +35° et +55°.

La figure 12b illustre la distribution de puissance de pondération en dBm dans le réseau linéaire pour un dépointage d'une valeur égale à +45°, dans le cas où toutes les antennes sont configurées dans le mode plus directif (S-PD) et dans de cas où toutes les antennes sont configurées dans le mode moins directif (S-MD).

Selon les résultats de la figure 12b, la configuration homogène dans le mode directif (S-MD) est plus avantageuse d'un point énergétique étant donné que la puissance de pondération appliquée à chaque antenne est bien inférieure à celle appliquée dans le cas d'une configuration homogène dans le mode plus directif (S-PD).

Ces comparaisons ont été élaborées pour des conditions de rayonnement équivalentes, i.e. telles que le diagramme de rayonnement du faisceau émis par le réseau d'antennes actives respecte un même gabarit de rayonnement comme illustré sur la figure 12c.

En conclusion, le dispositif de commande 3 est adapté à configurer toutes les antennes actives reconfigurables du réseau :

- dans le mode plus directif (S-PD), lorsque la valeur de dépointage reçue est égale à 0°$\pm$15°, c'est-à-dire comprise entre -15° et +15° ; et

- dans le mode moins directif (S-MD), lorsque la valeur de dépointage reçue est égale à $\pm$45°$\pm$10°, c'est-à-dire comprise entre -55° et -35° ou entre +35° et +55°.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, le système d'émission/réception radiofréquence pourra être conçu pour l'émission de plusieurs faisceaux simultanément selon un mode multi-opérateurs lorsque l'infrastructure est partagée par plusieurs opérateurs de réseaux mobiles.

Dans le cas où les antennes sont reconfigurables, l'élément parasite de chaque antenne pourra être conçu de sorte que l'antenne peut être reconfigurée selon plus de deux configurations correspondant à des états de directivité distincts permettant ainsi de sélectionner la directivité parmi une pluralité de modes.

De manière générale, comme décrit précédemment, l'invention permet avantageusement de réduire la consommation énergétique du réseau d'antennes actives, en sélectionnant une configuration des éléments parasites adaptée à éteindre le plus grand nombre d'antennes en fonction de l'angle de dépointage tout en respectant les conditions de rayonnement souhaitées. Les configurations optimales sont déterminées en tenant compte, dans le calcul de la loi de pondération, de la directivité des antennes modifiée par le pilotage des éléments parasites. Ces configurations et leur association à des valeurs d'angle de dépointage particulières peuvent être préalablement stockées dans une table de référence, à laquelle le module de pilotage des éléments parasites a accès pour configurer ces derniers en fonction de l'angle de dépointage reçu.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

**Revendications**

1. Système d'émission/réception radiofréquence (100) comportant :

   • un réseau (308; 308a, 308b, 308c, 308d ; 308a', 308b', 308c', 308d') d'antennes actives (1.1,...,1.n,..,1.N);
   • un dispositif de commande (3 ; 3a, 3b, 3c, 3d ; 3a', 3b', 3c', 3d') du réseau d'antennes actives conçu pour :

      • recevoir une valeur de dépointage ($\varphi$) parmi plusieurs valeurs de dépointage possibles ($\varphi_1,..,\varphi_n$);
      • commander les antennes actives (1.1,...,1.n,..,1.N) de manière à émettre au moins un faisceau (F ; Fa, Fb, Fb, Fc) dépointé d'un dépointage ($\varphi$) reçu par rapport à une direction par défaut ;

      • des éléments parasites (6.1,...,6.n,...,6.N) associés respectivement à au moins certaines des antennes actives (1.1,...,1.n,..,1.N) dudit réseau; et
      • des moyens de pilotage (307a) conçus pour sélectivement activer chacun des éléments parasites de manière à modifier une directivité de l'antenne active associée pour réduire une consommation énergétique du réseau d'antennes actives ; les moyens de pilotage (307a) et les éléments parasites (6.1,...,6.n,...,6.N) étant conçus pour reconfigurer les antennes actives dudit réseau (308) selon au moins deux états de directivité distincts sélectionnés parmi un état moins directif (S-MD) et un état plus directif (S-PD) ; les moyens de pilotage (307a) étant conçus pour reconfigurer certaines antennes actives dudit réseau (308) selon l'état moins directif (S-MD) et certaines antennes actives dudit réseau (308) selon l'état plus directif (S-PD) lorsque la valeur de dépointage reçue est comprise au moins entre -35° et -55° ou entre +35° et +55°.

2. Système selon la revendication 1, dans lequel les antennes du réseau d'antennes actives sont unidirectionnelles.

3. Système selon la revendication 1, dans lequel les moyens de pilotage (307a) sont conçus pour reconfigurer toutes les antennes actives dudit réseau (308) selon l'état plus directif (S-PD) lorsque la valeur de dépointage reçue est comprise au moins entre -15° et +15°.

4. Système selon l'une quelconque des revendications 1 à 3, dans lequel chaque élément parasite (6.n) comprend au moins deux sous-éléments (6.na, 6.nb), le système comportant en outre, pour chaque élément parasite, une diode PIN (6.nc) conçue pour connecter lesdits au moins deux sous-éléments entre eux et dans lequel les moyens de pilotage (307a) sont conçus pour sélectivement piloter chacune des diodes PIN (6.nc).

5. Système selon l'une quelconque des revendications 1 à 4, dans lequel le réseau (308) d'antennes actives comprend :

   • un groupe principal (A0) d'antennes actives orientées selon une direction principale (d0) ; et
   • au moins un groupe auxiliaire (A1; A2) d'une ou plusieurs antennes actives, dites auxiliaires, orientées selon une direction auxiliaire (d1; d2), différente de la direction principale (d0).

6. Système selon la revendication 5, dans lequel les moyens de pilotage (307a) sont adaptés pour configurer les antennes du groupe principal (A0) selon l'état moins directif (S-MD) et les antennes auxiliaires selon l'état plus directif (S-PD), lorsque la valeur de dépointage reçue est égale à +45°±10° ou -45°±10°.

7. Système selon la revendication 5 ou 6, dans lequel la direction principale (d0) et la direction auxiliaire (d1; d2) forment un angle aigu ($\alpha$; $\beta$), par exemple compris entre -50° et - 30° ou entre +30° et +50°, de préférence égal à ±45°±10°.

8. Système selon l'une quelconque des revendications 5 à 7, dans lequel le groupe principal (A0) comprend un nombre principal (N0) d'antennes et ledit au moins un groupe auxiliaire (A1; A2) comprend un nombre auxiliaire (N1; N2) d'antennes compris entre 1/7 et 1/3 du nombre principal (N0).

9. Système selon l'une quelconque des revendications 1 à 8, comportant:

   • un premier groupe auxiliaire (A1) d'antennes actives auxiliaires orientées selon une première direction auxiliaire (d1); et
   • un deuxième groupe auxiliaire (A2) d'antennes actives auxiliaires orientées selon une deuxième direction auxiliaire (d2), différente de la direction principale (d0) et de la première direction auxiliaire (d1) ;
   et dans lequel,
   • la direction principale (d0) forme avec la première direction auxiliaire (d1) un premier angle aigu ($\alpha$), par exemple compris entre +30° et +50°, de préférence égal à +45°±10°; et
   • la direction principale (d0) forme avec la deuxième direction auxiliaire (d2) un deuxième angle aigu ($\beta$), par exemple compris entre -30° et -50°, de préférence égal à -45°±10°.

10. Système selon la revendication 9, dans lequel les premier et deuxième angles ($\alpha$, $\beta$) sont de signe opposé et ont des valeurs absolues égales, de préférence à 45°±10°.

11. Système selon la revendication 9 ou 10, dans lequel les premier et deuxième groupes auxiliaires (A1, A2) d'antennes actives ont un même nombre (N12) d'antennes actives.

12. Système selon l'une quelconque des revendications 1 à 10, dans lequel chaque antenne active (1.1,....,1.n,...,1.N) comprend un élément rayonnant (5.1,...,5.n,...,5.N), le système comportant un support des éléments rayonnants, dans lequel le support comporte une section respective (8.0, 8.1, 8.2) pour chaque groupe (A0, A1, A2) d'antennes actives, et dans lequel chaque section (8.0, 8.1, 8.2) du support est soit linéaire de sorte que les éléments rayonnants sont distribués selon une droite le long de cette section de support, soit plane de sorte que les éléments rayonnants sont distribués selon une matrice en deux dimensions sur cette section de support plane.

13. Système selon l'une quelconque des revendications 1 à 12, dans lequel le faisceau (F) émis est unidirectionnel.

14. Installation (1000) d'émission/réception radiofréquence comportant quatre systèmes selon les revendications 9 et 10 prises ensemble, agencés en octogone.

15. Installation (1100) d'émission/réception radiofréquence comportant deux systèmes selon l'une quelconque des revendications 1 à 14, dans laquelle les réseaux d'antennes actives des deux systèmes présentent des antennes actives auxiliaires en commun.

16. Installation (1100) selon la revendication 15 comportant deux paires de systèmes dont les réseaux (308a' ; 308b' ; 308c' ; 308d') d'antennes actives sont agencés en octogone irrégulier comprenant quatre côtés principaux sur lesquels sont distribuées les antennes actives principales et quatre côtés auxiliaires sur lesquels sont distribuées les antennes actives auxiliaires (M1 ; M2 ; M3 ; M4), dans laquelle, pour chaque côté auxiliaire, toutes les antennes auxiliaires (M1 ; M2 ; M3 ; M4) sont en commun avec deux réseaux adjacents (308a', 308d' ; 308a', 308b' ; 308b', 308c' ; 308c', 308d').

**17.** Procédé d'émission/réception radiofréquence, comprenant les étapes suivantes :

• réception (E50) d'une valeur de dépointage (φ) parmi plusieurs valeurs de dépointage possibles ; et
• commande d'un réseau (308; 308a, 308b, 308c, 308d ; 308a', 308b', 308c', 308d') d'antennes actives de manière à émettre au moins un faisceau dépointé (F ; Fa, Fb, Fb, Fc) d'un dépointage reçu par rapport à une direction par défaut, le réseau d'antennes actives comprenant des éléments parasites (6.1,...,6.n,...,6.N) associés respectivement à au moins certaines des antennes actives;

et une étape de pilotage lors de laquelle chacun des éléments parasites est sélectivement activé de manière à modifier une directivité de l'antenne active associée pour réduire une consommation énergétique du réseau d'antennes actives, les antennes actives dudit réseau (308) étant reconfigurées selon au moins deux états de directivité distincts sélectionnés parmi un état moins directif (S-MD) et un état plus directif (S-PD), certaines antennes actives dudit réseau (308) reconfigurées selon l'état moins directif (S-MD) et certaines antennes actives dudit réseau (308) selon l'état plus directif (S-PD), lorsque la valeur de dépointage reçue est comprise au moins entre -35° et -55° ou entre +35° et +55°.

**18.** Programme d'ordinateur (P) téléchargeable depuis un réseau de communication et/ou enregistré sur un support lisible par ordinateur, **caractérisé en ce qu'**il comprend des instructions pour l'exécution des étapes d'un procédé d'émission/réception radiofréquence selon la revendication 17, lorsque ledit programme (P) est exécuté sur un ordinateur d'un système selon la revendication 1.

**Patentansprüche**

**1.** Hochfrequenz-Sende-/Empfangssystem (100), das aufweist:

- ein Netzwerk (308; 308a, 308b, 308c, 308d; 308a', 308b', 308c', 308d') aktiver Antennen (1.1,...,1.n,..,1.N);
- eine Steuereinheit (3; 3a, 3b, 3c, 3d; 3a', 3b', 3c', 3d') des Netzwerks aktiver Antennen, ausgelegt zum:

- Empfangen eines Versatzwerts (φ) aus mehreren möglichen Versatzwerten (φ_1,..,φ_n);
- Steuern der aktiven Antennen (1.1,...,1.n,..,1.N) so, dass mindestens ein Strahl (F; Fa, Fb, Fc) ausgesendet wird, der um einen empfangenen Versatz (Φ) gegenüber einer Standardrichtung versetzt ist;

- parasitäre Elemente (6.1, ..., 6.n, ..., 6.N), die jeweils mindestens bestimmten der aktiven Antennen (1.1, ..., 1.n, ..., 1.N) des Netzwerks zugeordnet sind;
und
- Ansteuermittel (307a), die dazu ausgelegt sind, jedes der parasitären Elemente selektiv so zu aktivieren, dass eine Direktivität der zugeordneten aktiven Antenne verändert wird, um einen Energieverbrauch des Netzwerks aktiver Antennen zu reduzieren; wobei die Ansteuermittel (307a) und die parasitären Elemente (6.1,...,6.n,...,6.N) dazu ausgelegt sind, die aktiven Antennen des Netzwerks (308) gemäß mindestens zwei unterschiedlichen Direktivitätszuständen, die aus einem weniger direktiven Zustand (S-MD) und einem stärker direktiven Zustand (S-PD) ausgewählt sind, zu rekonfigurieren; wobei die Ansteuermittel (307a) dazu ausgelegt sind, bestimmte aktive Antennen des Netzwerks (308) gemäß dem weniger direktiven Zustand (S-MD) und bestimmte aktive Antennen des Netzwerks (308) gemäß dem stärker direktiven Zustand (S-PD) zu rekonfigurieren, wenn der empfangene Versatzwert mindestens zwischen -35° und -55° oder zwischen +35° und +55° liegt.

**2.** System nach Anspruch 1, wobei die Antennen des Netzwerks aktiver Antennen unidirektional sind.

**3.** System nach Anspruch 1, wobei die Ansteuermittel (307a) dazu ausgelegt sind, alle aktiven Antennen des Netzwerks (308) gemäß dem stärker direktiven Zustand (S-PD) zu rekonfigurieren, wenn der empfangene Versatzwert mindestens zwischen -15° und +15° liegt.

**4.** System nach einem der Ansprüche 1 bis 3, wobei jedes parasitäre Element (6.n) mindestens zwei Unterelemente (6.na, 6.nb) umfasst, wobei das System weiter, für jedes parasitäre Element, eine PIN-Diode (6.nc) umfasst, die dazu ausgelegt ist, die mindestens zwei Unterelemente miteinander zu verbinden, und wobei die Ansteuermittel (307a) dazu ausgelegt sind, jede der PIN-Dioden (6.nc) selektiv anzusteuern.

**5.** System nach einem der Ansprüche 1 bis 4, wobei das Netzwerk (308) aktiver Antennen umfasst:

- eine Hauptgruppe (A0) aktiver Antennen, die in einer Hauptrichtung (d0) ausgerichtet sind; und
- mindestens eine Hilfsgruppe (A1; A2) aus einer oder mehreren aktiven Antennen, sogenannten Hilfsantennen, die in einer Hilfsrichtung (d1; d2) ausgerichtet sind, die sich von der Hauptrichtung (d0) unterscheidet.

**6.** System nach Anspruch 5, wobei die Ansteuermittel (307a) dazu angepasst sind, die Antennen der Hauptgruppe (AO) gemäß dem weniger direktiven Zustand (S-MD) und die Hilfsantennen gemäß dem stärker direktiven Zustand (S-PD) zu konfigurieren, wenn der empfangene Versatzwert gleich +45°±10° oder -45°±10° ist.

**7.** System nach Anspruch 5 oder 6, wobei die Hauptrichtung (d0) und die Hilfsrichtung (d1; d2) einen spitzen Winkel ($\alpha$; $\beta$) bilden, beispielsweise zwischen -50° und -30° oder zwischen +30° und +50°, bevorzugt gleich ±45°±10°.

**8.** System nach einem der Ansprüche 5 bis 7, wobei die Hauptgruppe (A0) eine Hauptanzahl (N0) von Antennen umfasst und die mindestens eine Hilfsgruppe (A1; A2) eine Hilfsanzahl (N1; N2) von Antennen umfasst, die zwischen 1/7 und 1/3 der Hauptanzahl (N0) liegt.

**9.** System nach einem der Ansprüche 1 bis 8, das aufweist:

- eine erste Hilfsgruppe (A1) aktiver Hilfsantennen, die in einer ersten Hilfsrichtung (d1) ausgerichtet sind; und
- eine zweite Hilfsgruppe (A2) aktiver Hilfsantennen, die in einer zweiten Hilfsrichtung (d2) ausgerichtet sind, die sich von der Hauptrichtung (d0) und der ersten Hilfsrichtung (d1) unterscheidet;
und wobei
- die Hauptrichtung (d0) mit der ersten Hilfsrichtung (d1) einen ersten spitzen Winkel ($\alpha$) bildet, beispielsweise zwischen +30° und +50°, bevorzugt gleich +45°±10°; und
- die Hauptrichtung (d0) mit der zweiten Hilfsrichtung (d2) einen zweiten spitzen Winkel ($\beta$) bildet, beispielsweise zwischen -30° und -50°, bevorzugt gleich - 45°±10°.

**10.** System nach Anspruch 9, wobei der erste und der zweite Winkel ($\alpha$, $\beta$) gegensinnig sind und gleiche Absolutwerte aufweisen, bevorzugt 45°±10°.

**11.** System nach Anspruch 9 oder 10, wobei die erste und zweite Hilfsgruppe (A1, A2) aktiver Antennen die gleiche Anzahl (N12) aktiver Antennen aufweisen.

**12.** System nach einem der Ansprüche 1 bis 10, wobei jede aktive Antenne (1.1,.... ,1.n,...,1.N) ein strahlendes Element (5.1 ,...,S.n,...,S.N) umfasst, wobei das System einen Träger der strahlenden Elemente aufweist, wobei der Träger einen jeweiligen Abschnitt (8.0, 8.1, 8.2) für jede Gruppe (A0, A1, A2) aktiver Antennen aufweist, und wobei jeder Abschnitt (8.0, 8.1, 8.2) des Trägers entweder linear ist, so dass die strahlenden Elemente entlang einer Geraden entlang dieses Trägerabschnitts verteilt sind, oder flach ist, so dass die strahlenden Elemente in einer zweidimensionalen Matrix auf diesem flachen Trägerabschnitt verteilt sind.

**13.** System nach einem der Ansprüche 1 bis 12, wobei der gesendete Strahl (F) unidirektional ist.

**14.** Hochfrequenz-Sende-/Empfangsanlage (1000), die vier Systeme nach den Ansprüchen 9 und 10 zusammen, angeordnet in einem Achteck, aufweist.

**15.** Hochfrequenz-Sende-/Empfangsanlage (1100), die zwei Systeme nach einem der Ansprüche 1 bis 14 aufweist, wobei die Netzwerke aktiver Antennen der zwei Systeme gemeinsame aktive Hilfsantennen aufweisen.

**16.** Anlage (1100) nach Anspruch 15, die zwei Paare von Systemen aufweist, deren Netzwerke (308a'; 308b'; 308c'; 308d') aktiver Antennen in einem unregelmäßigen Achteck angeordnet sind, das vier Hauptseiten, auf denen die aktiven Hauptantennen verteilt sind, und vier Hilfseiten, auf denen die aktiven Hilfsantennen (M1; M2; M3; M4) verteilt sind, umfasst, wobei für jede Hilfseite alle Hilfsantennen (M1; M2; M3; M4) mit zwei benachbarten Netzwerken (308a', 308d'; 308a', 308b'; 308b', 308c'; 308c', 308d') gemeinsam sind.

**17.** Verfahren zum Hochfrequenzsenden/-empfangen, umfassend die folgenden Schritte:

- Empfangen (E50) eines Versatzwertes ($\varphi$) aus mehreren möglichen Versatzwerten; und

- Steuern eines Netzwerks (308; 308a, 308b, 308c, 308d; 308a', 308b', 308c', 308d') aktiver Antennen, um mindestens einen versetzten Strahl (F; Fa, Fb, Fc) eines in Bezug auf eine Standardrichtung empfangenen Versatzes zu senden, wobei das Netzwerk aktiver Antennen parasitäre Elemente (6.1, ..., 6.n, ..., 6.N) umfasst, die jeweils mindestens bestimmten der aktiven Antennen zugeordnet sind;

und einen Ansteuerungsschritt, bei dem jedes der parasitären Elemente selektiv so aktiviert wird, dass eine Direktivität der zugeordneten aktiven Antenne verändert wird, um einen Energieverbrauch des Netzwerks aktiver Antennen zu reduzieren, wobei die aktiven Antennen des Netzwerks (308) gemäß mindestens zwei unterschiedlichen Direktivitätszuständen, die aus einem weniger direktiven Zustand (S-MD) und einem stärker direktiven Zustand (S-PD) ausgewählt sind, rekonfiguriert werden, wobei bestimmte aktive Antennen des Netzwerks (308) gemäß dem weniger direktiven Zustand (S-MD) und bestimmte aktive Antennen des Netzwerkes (308) gemäß dem stärker direktiven Zustand (S-PD) rekonfiguriert werden, wenn der empfangene Versatzwert mindestens zwischen -35° und -55° oder zwischen +35° und +55° liegt.

18. Computerprogramm (P), das von einem Kommunikationsnetzwerk herunterladbar und/oder auf einem computerlesbaren Träger aufgezeichnet ist, **dadurch gekennzeichnet, dass** es Anweisungen für die Ausführung der Schritte eines Hochfrequenz-Sende-/Empfangsverfahrens nach Anspruch 17, wenn das Programm (P) auf einem Computer eines Systems nach Anspruch 1 ausgeführt wird, umfasst.

**Claims**

1. A radiofrequency transmission/reception system (100) comprising:

   • an array (308; 308a, 308b, 308c, 308d; 308a', 308b', 308c', 308d') of active antennas (1.1,...,1.n,...,1.N);
   • a device (3; 3a, 3b, 3c, 3d; 3a', 3b', 3c', 3d') for controlling the array of active antennas designed to:

      • receive a misalignement value ($\varphi$) from among several possible misalignements values ($\varphi i,..,\varphi n$);
      • control the active antennas (1.1,...,1.n,...,1.N) so as to transmit at least one beam (F; Fa, Fb, Fb, Fc) misaligned by a received misalignement ($\varphi$) relative to a default direction;

   • parasitic elements (6.1,...,6.n,...,6.N) associated respectively with at least some of the active antennas (1.1,...,1.n,...,1.N) of said array; and
   • driving means (307a) designed to selectively activate each of the parasitic elements so as to modify a directivity of the associated active antenna in order to reduce an energy consumption of the active antenna array; the driving means (307a) and the parasitic elements (6.1,...,6.n,...,6.N) being designed to reconfigure the active antennas of said array (308) according to at least two distinct directivity states selected from a less directive state (S-MD) and a more directive state (S-PD); the driving means (307a) being designed to reconfigure certain active antennas of said array (308) according to the less directive state (S-MD) and certain active antennas of said array (308) according to the more directive state (S-PD) when the received misalignement value is at least between -35° and -55° or between +35° and +55°.

2. The system according to claim 1, wherein the antennas of the active antenna array are unidirectional.

3. The system according to claim 1, wherein the driving means (307a) are designed to reconfigure all the active antennas of said array (308) to the more directive state (S-PD) when the received misalignement value is at least between -15° and +15°.

4. The system according to any one of claims 1 to 3 wherein each parasitic element (6.n) comprises at least two sub-elements (6.na, 6.nb), the system further comprising, for each parasitic element, a PIN diode (6.nc) designed to connect said at least two sub-elements together and wherein the driving means (307a) are designed to selectively drive each of the PIN diodes (6.nc).

5. The system according to any one of claims 1 to 4, wherein the array (308) of active antennas comprises:

   • a main group (A0) of active antennas oriented in a main direction (d0); and
   • at least one auxiliary group (A1; A2) of one or more active antennas, called auxiliaries, oriented in an auxiliary direction (d1; d2), different from the main direction (d0).

**6.** The system according to claim 5, wherein the driving means (307a) are adapted to configure the antennas of the main group (A0) to the less directive state (S-MD) and the auxiliary antennas to the more directive state (S-PD), when the received misalignement value is equal to +45°±10° or -45°±10°.

**7.** The system according to claim 5 or 6, wherein the main direction (d0) and the auxiliary direction (d1; d2) form an acute angle ($\alpha$; $\beta$), for example between -50° and -30° or between +30° and +50°, preferably equal to ±45°±10°.

**8.** The system according to any one of claims 5 to 7, wherein the main group (A0) comprises a main number (N0) of antennas and said at least one auxiliary group (A1; A2) comprises an auxiliary number (N1; N2) of antennas between 1/7 and 1/3 of the main number (N0).

**9.** The system according to any one of claims 1 to 8, comprising:

• a first auxiliary group (A1) of auxiliary active antennas oriented in a first auxiliary direction (d1); and
• a second auxiliary group (A2) of auxiliary active antennas oriented in a second auxiliary direction (d2), different from the main direction (d0) and the first auxiliary direction (d1); and wherein,
• the main direction (d0) forms with the first auxiliary direction (d1) a first acute angle ($\alpha$), for example between +30° and +50°, preferably equal to +45°±10°; and
• the main direction (d0) forms a second acute angle ($\beta$) with the second auxiliary direction (d2), for example between -30° and -50°, preferably equal to -45°±10°.

**10.** The system according to claim 9, wherein the first and second angles ($\alpha$, $\beta$) are of opposite sign and have equal absolute values, preferably 45°±10°.

**11.** The system according to claim 9 or 10, wherein the first and second auxiliary groups (A1, A2) of active antennas have the same number (N12) of active antennas.

**12.** The system according to any one of claims 1 to 10, wherein each active antenna (1.1,...., 1.n,..., 1.N) comprises a radiating element (5.1, ..., 5.n, ..., 5.N), the system comprising a support for the radiating elements, wherein the support comprises a respective section (8.0, 8.1, 8.2) for each group (A0, A1, A2) of active antennas, and wherein each section (8.0, 8.1, 8.2) of the support is either linear so that the radiating elements are distributed along a straight line along this support section, or planar so that the radiating elements are distributed in a two-dimensional matrix on this planar support section.

**13.** The system according to any one of claims 1 to 12, wherein the beam (F) is unidirectional.

**14.** A radiofrequency transmitting/receiving installation (1000) comprising four systems according to claims 9 and 10 taken together, arranged in an octagon.

**15.** The radiofrequency transmitting/receiving installation (1100) comprising two systems according to any one of claims 1 to 14, wherein the antenna arrays of both systems share active auxiliary antennas.

**16.** An installation (1100) according to claim 15 comprising two pairs of systems, of which the arrays (308a'; 308b'; 308c'; 308d') of active antennas are arranged in an irregular octagon comprising four main sides wherein the main active antennas are distributed and four auxiliary sides wherein the auxiliary active antennas (M1 ; M2; M3; M4), wherein, for each auxiliary side, all auxiliary antennas (M1; M2; M3; M4) are in common with two adjacent arrays (308a', 308d'; 308a', 308b'; 308b', 308c'; 308c', 308d').

**17.** A radiofrequency transmission/reception method, comprising the following steps:

• receiving (E50) one misalignment value ($\varphi$) of a number of possible misalignement values; and
• controlling an array (308; 308a, 308b, 308c, 308d; 308a', 308b', 308c', 308d') of active antennas so as to transmit at least one misaligned beam (F; Fa, Fb, Fb, Fc) of a received misalignement relative to a default direction, the array of active antennas comprising parasitic elements (6.1,...,6.n,...,6.N) respectively associated with at least some of the active antennas;

and a driving step wherein each of the parasitic elements is selectively activated so as to modify a directivity of the associated active antenna to reduce an energy consumption of the active antenna array, the active antennas of said array (308) being reconfigured according to at least two distinct directivity states selected from a less directive state (S-MD) and a more directive state (S-PD), some of the active antennas of said array (308) being reconfigured to the less directive state (S-MD) and some of the active antennas of said array (308) being reconfigured to the more directive state (S-PD), when the received misalignement value is at least between -35° and -55° or between +35° and +55°.

18. A computer program (P) downloadable from a communication network and/or recorded on a computer-readable medium, **characterized in that** it comprises instructions for executing the steps of a radio frequency transmission/-reception method according to claim 17 when said program (P) is executed on a computer of a system according to claim 1.

EP 4 208 956 B1

**FIG. 1**

3.1 CPU

3 

3.7 I/O

3.9

3.2 RAM

3.8 NET

3.6

données opérateurs:
gabarit de rayonnement,
dépointage,
données à transmettre

100

302

303

304

307a

301

305

306

$P_{out}^n$

307

P

$\alpha, \beta, p0, p1, p2,$
$N0, N1, N2$

$P_{in}^n = f_{Pin}(P_{out}^n)$

$V_{DC}^n = f_{Pdc}(P_{out}^n)$

$V_{on/off}^n$

d0    d0    d0

d1

6.3   6.4   1.n   $V_{on/off}^n$   A0

6.2   6.n

5.3   5.4   5.n

6.1   $\alpha$   8.1   8.0   p0   6.(N-1)   d2

5.2   $\beta$   5.(N-1)

A1   $\alpha$   $p1$   8.2   $\beta$   6.N

5.1   $P_{out}^n$   $p2$   5.N

$V_{DC}^1$   $V_{DC}^3$   $V_{DC}^n$   A2

308   4.1   4.n   4.N

$P_{in}^1$   $P_{in}^3$   $P_{in}^n$

24

**FIG. 2**

α=+45° et β=-45°

$L=0.4\lambda$ $L=0.4\lambda$

$V^n_{on/off}$

$e=0.3\lambda$

**FIG. 3**

**FIG. 4**

**FIG. 5**

FIG. 6

Réseau linéaire (RL) vs réseau linéaire par sections (RLS)

| φ = 0° (+ 15°) | Antennes éteintes | P$_{dc}$ (W) | Réduction (%) | φ = +45° (+30°) | Antennes éteintes | P$_{dc}$ (W) | Réduction (%) |
|---|---|---|---|---|---|---|---|
| RL | 6 (5) | 13.3 (14.5) | 8 (7) | RL | 0 (4) | 22.7 (16.4) | 12 (7) |
| RLS | 7 (6) | 12.3 (13.5) | | RLS | 2 (5) | 20.0 (15.3) | |

**FIG. 7a**

**FIG. 7b**

**FIG. 7c**

Réseau linéaire par section (RLS) à antennes actives reconfigurables

| φ = 0° (+ 15°) | Antennes éteintes | $P_{dc}$ (W) | Réduction (%) | φ = +45° (+30°) | Antennes éteintes | $P_{dc}$ (W) | Réduction (%) |
|---|---|---|---|---|---|---|---|
| S_PD | 7 (6) | 12.3 (13,5) | 11 (10) | S_PD | ⟨2⟩ (5) | 20 (15,4) | 5 (0) |
| S_MD & S_PD | 6 (5) | 13.8 (15) | | S_MD & S_PD | ⟨2⟩ (5) | 19 (15,4) | |

## FIG. 8a

FIG. 8b

FIG. 8c

FIG. 9

**FIG. 10**

**FIG. 11**

Réseau linéaire (RL) à antennes reconfigurables

| $\varphi^{max} = 0°$ | Antennes éteintes | $P_{dc}$ (W) | Réduction (%) | $\varphi^{max} = +45°$ | Antennes éteintes | $P_{dc}$ (W) | Réduction (%) |
|---|---|---|---|---|---|---|---|
| S_PD | 6 | 13.27 | 10.33 | S_PD | 0 | 22.7 | 6 |
| S_MD | 5 | 14.8 | | S_MD | 0 | 21.4 | |

## FIG. 12a

FIG. 12b

FIG. 12c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005088358 A1

- FR 1912812

**Littérature non-brevet citée dans la description**

- **A. M. MONTASER et al.** Circular, Hexagonal and Octagonal Array Geometries for Smart Antenna Systems Using Hybrid CFO-HC Algorithm. *Journal of Engineering Sciences*, November 2012, vol. 40 (16), 1715-1732

- **S. HAN.** ; **C.-L. I** ; **Z. XU** ; **C. ROWELL**. Large-Scale Antenna Systems with Hybrid Analog and Digital Beamforming for Millimeter Wave 5G. *IEEE Communications Magazine*, January 2015